# EUROPEAN PATENT APPLICATION

(11) **EP 2 063 539 A2**
(43) Date of publication of application: **27.05.2009**
(21) Application number: 08018737.0
(22) Date of filing: 27.10.2008
(51) Int. Cl.: H04B 1/00

(54) **An IC for a high frequency communication device with a minimal off chip components**

(30) Priority: 02.11.2007 US 934504
(71) Applicant: Broadcom Corporation, Irvine California 92617-3038 (US)
(72) Inventor: Georgantas, Theodoros, Haidari Attika 12461 (GR); Plevridis, Sofoklis, Glyfada Attika 16674 (GR); Kavadias, Spyridon, Voula 16673 (GR); Vavelidis, Konstantinos, Ilioupoli 16342 (GR); Kapnistis, Babis, Pefki 15121 (GR)
(74) Representative: Jehle, Volker Armin

(57) **Abstract**

An integrated circuit (IC) includes a receiver module, a transmitter module, an inbound digital module, and a local oscillation generation module. The receiver module is operable to convert an inbound high frequency signal into a down converted inbound signal based on a receive local oscillation independently of a protocol of the inbound high frequency signal. The inbound digital module is coupled to compensate the down converted inbound signal in accordance with a selected one of the first plurality of wireless communication protocols. The transmitter module is operable to convert a first outbound signal into a first up converted signal based on a transmit local oscillation when a first one of the first plurality of wireless communication protocols is active and to convert a second outbound signal into a second up converted signal based on the transmit local oscillation when a second one of the first plurality of wireless communication protocols is active.

## Description

### CROSS REFERENCE TO RELATED PATENTS

This application relates to co-pending patent application having the same filing date as the present application, entitled HIGH FREQUENCY COMMUNICATION DEVICE WITH MINIMAL OFF CHIP COMPONENTS, having a serial number of TBD, and an attorney docket number of BP6570.

### STATEMENT REGARDING FEDERALLY SPONSORED RESEARCH OR DEVELOPMENT - NOT APPLICABLE

### INCORPORATION-BY-REFERENCE OF MATERIAL SUBMITTED ON A COMPACT DISC - NOT APPLICABLE

### BACKGROUND OF THE INVENTION

### TECHNICAL FIELD OF THE INVENTION

This invention relates generally to wireless communication systems and more particularly to wireless communication devices used within such wireless communication systems.

### DESCRIPTION OF RELATED ART

Communication systems are known to support wireless and wire lined communications between wireless and/or wire lined communication devices. Such communication systems range from national and/or international cellular telephone systems to the Internet to point-to-point in-home wireless networks. Each type of communication system is constructed, and hence operates, in accordance with one or more communication standards. For instance, wireless communication systems may operate in accordance with one or more standards including, but not limited to, IEEE 802.11, Bluetooth, advanced mobile phone services (AMPS), digital AMPS, global system for mobile communications (GSM), code division multiple access (CDMA), local multi-point distribution systems (LMDS), multi-channel-multi-point distribution systems (MMDS), radio frequency identification (RFID), Enhanced Data rates for GSM Evolution (EDGE), General Packet Radio Service (GPRS), WiMAX, extensions, and/or variations thereof.

Depending on the type of wireless communication system, a wireless communication device, such as a cellular telephone, two-way radio, personal digital assistant (PDA), personal computer (PC), laptop computer, home entertainment equipment, RFID reader, RFID tag, et cetera communicates directly or indirectly with other wireless communication devices. For direct communications (also known as point-to-point communications), the participating wireless communication devices tune their receivers and transmitters to the same channel or channels (e.g., one of the plurality of radio frequency (RF) carriers of the wireless communication system or a particular RF frequency for some systems) and communicate over that channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switch telephone network, via the Internet, and/or via some other wide area network.

For each wireless communication device to participate in wireless communications, it includes a built-in radio transceiver (i.e., receiver and transmitter) or is coupled to an associated radio transceiver (e.g., a station for in-home and/or in-building wireless communication networks, RF modem, etc.). As is known, the receiver is coupled to an antenna and includes a low noise amplifier, one or more intermediate frequency stages, a filtering stage, and a data recovery stage. The low noise amplifier receives inbound RF signals via the antenna and amplifies then. The one or more intermediate frequency stages mix the amplified RF signals with one or more local oscillations to convert the amplified RF signal into baseband signals or intermediate frequency (IF) signals. The filtering stage filters the baseband signals or the IF signals to attenuate unwanted out of band signals to produce filtered signals. The data recovery stage recovers raw data from the filtered signals in accordance with the particular wireless communication standard.

As is also known, the transmitter includes a data modulation stage, one or more intermediate frequency stages, and a power amplifier. The data modulation stage converts raw data into baseband signals in accordance with a particular wireless communication standard. The one or more intermediate frequency stages mix the baseband signals with one or more local oscillations to produce RF signals. The power amplifier amplifies the RF signals prior to transmission via an antenna.

While transmitters generally include a data modulation stage, one or more IF stages, and a power amplifier, the particular implementation of these elements is dependent upon the data modulation scheme of the standard being supported by the transceiver. For example, if the baseband modulation scheme is Gaussian Minimum Shift Keying (GMSK), the data modulation stage functions to convert digital words into quadrature modulation symbols, which have a constant amplitude and varying phases. In this instance, the IF stage includes a phase locked loop (PLL) that generates an oscillation at a desired RF frequency, which is modulated based on the varying phases produced by the data modulation stage. The phase modulated RF signal is then amplified by the power amplifier in accordance with a transmit power level setting to produce a phase modulated RF signal.

As another example, if the data modulation scheme is 8-PSK (phase shift keying), the data modulation stage functions to convert digital words into symbols having varying amplitudes and varying phases. In this instance, the IF stage includes a phase locked loop (PLL) that generates an oscillation at a desired RF frequency, which is modulated based on the varying phases produced by the data modulation stage. The phase modulated RF signal is then amplified by the power amplifier in accordance with the varying amplitudes to produce a phase and amplitude modulated RF signal.

As the desire for wireless communication devices to support multiple standards continues, recent trends include the desire to integrate more functions on to a single chip. In addition to including more functions on a single chip, communication device manufacturers desire less off chip components to simplify production.

Therefore, a need exists for a wireless communication device that includes an integrated circuit (IC) that implements multiple functions on the same IC die and reduces the requirement for off chip components.

### BRIEF SUMMARY OF THE INVENTION

The present invention is directed to apparatus and methods of operation that are further described in the following Brief Description of the Drawings, the Detailed Description of the Invention, and the claims. Other features and advantages of the present invention will become apparent from the following detailed description of the invention made with reference to the accompanying drawings.

According to an aspect, an integrated circuit (IC) comprises:
a receiver module operable to convert an inbound high frequency signal into a down converted inbound signal based on a receive local oscillation independently of a protocol of the inbound high frequency signal, wherein the inbound high frequency signal has a carrier frequency within a first set of frequency bands and is formatted in accordance with one of a first plurality of wireless communication protocols that utilize at least one of the first set of frequency bands;
an inbound digital module coupled to compensate the down converted inbound signal in accordance with a selected one of the first plurality of wireless communication protocols to produce a protocol specific inbound signal;
a transmitter module operable to:
   convert a first outbound signal into a first up converted signal based on a first representation of a transmit local oscillation when a first one of the first plurality of wireless communication protocols is active, wherein the first up converted signal has a carrier frequency within the first set of frequency bands; and
   convert a second outbound signal into a second up converted signal based on a second representation of the transmit local oscillation when a second one of the first plurality of wireless communication protocols is active, wherein the second up converted signal has a carrier frequency within the first set of frequency bands; and
a local oscillation module coupled to generate the receive local oscillation and the transmit local oscillation in accordance with the selected one of the first plurality of wireless communication protocols.

Advantageously, the receiver module comprises:
a low noise amplifier module coupled to amplify the inbound high frequency signal to produce an amplified inbound high frequency signal;
a mixing module coupled to mix the amplified inbound high frequency signal with the receive local oscillation to produce a low frequency mixed signal;
an analog gain and filtering module coupled to perform at least one of filtering and gain adjusting of the low frequency mixed signal to produce an adjusted low frequency mixed signal; and
an analog to digital conversion module coupled to convert the adjusted low frequency mixed signal into the down converted inbound signal.

Advantageously, the low noise amplifier module comprises:
a first low noise amplifier coupled to amplify the inbound high frequency signal to produce the amplified inbound high frequency signal when the inbound high frequency signal has the carrier frequency within a first frequency band of the first set of frequency bands; and
a second low noise amplifier coupled to amplify the inbound high frequency signal to produce the amplified inbound high frequency signal when the inbound high frequency signal has the carrier frequency within a second frequency band of the first set of frequency bands.

Advantageously, the mixing module comprises:
an in-phase/quadrature (I/Q) mixer coupled to mix the amplified inbound high frequency signal with an I component of the receive local oscillation and to mix the amplified high frequency signal with a Q component of the receive local oscillation to produce an IQ mixed signal; and
a filtering stage coupled to filter the IQ mixed signal to produce the low frequency mixed signal.

Advantageously, the IC further comprises:
the receiver module converting a second inbound high frequency signal into a second down converted inbound signal based on a second receive local oscillation independently of a protocol of the second inbound high frequency signal, wherein the second inbound high frequency signal has a carrier frequency within a second set of frequency bands and
is formatted in accordance with any one of a second plurality of wireless communication protocols that utilize the second frequency band;
the transmitter module converting a third outbound signal into a third up converted signal based on a second transmit local oscillation when a first one of the second plurality of wireless communication protocols is active, wherein the third up converted signal has a carrier frequency within the second set of frequency bands; and
the transmitter module converting a fourth outbound signal into a fourth up converted signal based on the second transmit local oscillation when a second one of the second plurality of wireless communication protocols is active, wherein the fourth up converted signal has a carrier frequency within the second set of frequency bands.

Advantageously, the receiver module comprises:
a first low noise amplifier module coupled to amplify the inbound high frequency signal to produce a first amplified inbound high frequency signal;
a first mixing module coupled to mix the first amplified inbound high frequency signal with the receive local oscillation to produce a first low frequency mixed signal;
a first analog gain and filtering module coupled to perform at least one of filtering and
gain adjusting of the first low frequency mixed signal to produce a first adjusted low frequency mixed signal;
a first analog to digital conversion module coupled to convert the first adjusted low frequency mixed signal into the down converted inbound signal;
a second low noise amplifier module coupled to amplify the second inbound high frequency signal to produce a second amplified inbound high frequency signal;
a second mixing module coupled to mix the second amplified inbound high frequency signal with the second receive local oscillation to produce a second low frequency mixed signal;
a second analog gain and filtering module coupled to perform at least one of filtering and
gain adjusting of the second low frequency mixed signal to produce a second adjusted low frequency mixed signal; and
a second analog to digital conversion module coupled to convert the second adjusted low frequency mixed signal into the second down converted inbound signal.

Advantageously, the second low noise amplifier module comprises:
a first low noise amplifier coupled to amplify the second inbound high frequency signal to produce the second amplified inbound high frequency signal when the second inbound high frequency signal has the carrier frequency within a first frequency band of the second set of frequency bands;
a second low noise amplifier coupled to amplify the second inbound high frequency signal to produce the second amplified inbound high frequency signal when the second inbound high frequency signal has the carrier frequency within a second frequency band of the second set of frequency bands; and
a third low noise amplifier coupled to amplify the second inbound high frequency signal to produce the second amplified inbound high frequency signal when the second inbound high frequency signal has the carrier frequency within a third frequency band of the second set of frequency bands.

Advantageously, the IC further comprises:
the local oscillation module including an independent phase locked loop (PLL) and a dependent PLL, wherein the independent PLL generates the receive local oscillation based on a reference oscillation and wherein the dependent PLL generates the transmit local oscillation based on an oscillation derived from the independent PLL; and
the transmitter module including:
   a polar coordinate generation module coupled to convert the first outbound signal into phase modulation information and amplitude modulation information, wherein the polar coordinate generation module provides the phase modulation information to the dependent PLL to produce the transmit local oscillation having phase modulation;
   a first power amplifier driver module coupled to amplify the transmit local oscillation having phase modulation in accordance with the amplitude modulation to produce the first up converted signal when the first one of the first plurality of wireless communication protocols is active;
   a mixing module coupled to mix the second outbound signal with the transmit local oscillation to produce a mixed signal when the second one of the first plurality of wireless communication protocols is active; and
   a second power amplifier driver module coupled to amplify the mixed signal to
   produce the second up converted signal.

Advantageously, the IC further comprises:
the local oscillation module including an independent phase locked loop (PLL) and a dependent PLL, wherein the independent PLL generates the receive local oscillation based on a reference oscillation and wherein the dependent PLL generates the transmit local oscillation based on an oscillation derived from the independent PLL; and
the transmitter module including:
   a polar coordinate generation module coupled to:
      convert the first outbound signal into phase modulation information and
      amplitude modulation information when the first one of the first plurality of wireless communication protocols is active;
      provide the phase modulation information to the dependent PLL to produce the transmit local oscillation having phase modulation;
      generate null phase modulation information and null amplitude modulation information when the second one of the first plurality of wireless communication protocols is active; and
      provide the null phase modulation information to the dependent PLL to
      produce the transmit local oscillation with null phase modulation;
   a mixing module coupled to:
      mix a normalized first inbound signal with the transmit local oscillation having the phase modulation to produce a first mixed signal when the first one of the first plurality of wireless communication protocols is active;
      and
      mix the second outbound signal with the transmit local oscillation having null phase modulation to produce a second mixed signal when the second
      one of the first plurality of wireless communication protocols is active;
   a power amplifier driver module coupled to:
      amplify the first mixed signal to produce the first up converted signal when the first one of the first plurality of wireless communication protocols is active; and
      amplify the second mixed signal to produce the second up converted signal when the second one of the first plurality of wireless communication protocols is active.
   convert a first outbound signal into a first up converted signal based on a transmit local oscillation when a first one of the first plurality of wireless communication protocols is active, wherein the first up converted signal has a carrier frequency within the first set of frequency bands; and
   convert a second outbound signal into a second up converted signal based on the transmit local oscillation when a second one of the first plurality of wireless communication protocols is active, wherein the second up converted signal has a carrier frequency within the first set of frequency bands.
   Advantageously, the IC further comprises:
   the transmitter module converting a third outbound signal into a third up converted signal based on a second transmit local oscillation when a first one of a second plurality of wireless communication protocols is active, wherein the third up converted signal has a carrier frequency within a second set of frequency bands, and wherein the second plurality of wireless communication protocols utilize the second set of frequency bands; and
   the transmit module converting a fourth outbound signal into a fourth up converted signal based on the second transmit local oscillation when a second one of the second plurality of wireless communication protocols is active, wherein the fourth up converted signal has a carrier frequency within the second set of frequency bands.
Advantageously, the IC further comprises:
   the local oscillation module including an independent phase locked loop (PLL) and a dependent PLL, wherein the independent PLL generates the receive local oscillation based on a reference oscillation and wherein the dependent PLL generates the transmit local oscillation and the second transmit local oscillation based on an oscillation derived from the independent PLL; and
   the transmitter module including:
      a polar coordinate generation module coupled to:
         convert the first inbound signal into first phase modulation information and first amplitude modulation information;
         provide the first phase modulation information to the dependent PLL to produce the transmit local oscillation having first phase modulation;
         convert the third inbound signal into second phase modulation information and second amplitude modulation information; and
         provide the second phase modulation information to the dependent PLL to
         produce the transmit local oscillation having second phase modulation;
      a first power amplifier driver module coupled to amplify the transmit local oscillation having first phase modulation in accordance with the first amplitude modulation to produce the first up converted signal;
      a second power amplifier driver module coupled to amplify the transmit local oscillation having second phase modulation in accordance with the second amplitude modulation to produce the third up converted signal;
      a first mixing module coupled to mix the second outbound signal with the transmit local oscillation to produce a first mixed signal;
      a third power amplifier driver module coupled to amplify the first mixed signal to produce the second up converted signal;
      a second mixing module coupled to mix the fourth outbound signal with the second transmit local oscillation to produce a second mixed signal; and
      a fourth power amplifier driver module coupled to amplify the second mixed signal to produce the fourth up converted signal.

Advantageously, the IC further comprises:
the transmitter module converting the first outbound signal into the first up converted signal based on the transmit local oscillation when the first one of the first plurality of wireless communication protocols is active, wherein the first up converted signal has a carrier frequency within a first frequency band or a second frequency band of the first set of frequency bands; and
the transmitter module converting the second outbound signal into the second up converted signal based on the transmit local oscillation when the second one of the first plurality of wireless communication protocols is active, wherein the second up converted signal has a carrier frequency within the first frequency band or the second frequency band of the first set of frequency bands.

Advantageously, the IC further comprises:
a baseband processing module coupled to:
   establish the selected one of the first plurality of wireless communication protocols;
   convert the protocol specific inbound signal into inbound data;
   convert first outbound data into the first outbound signal when the first one of the first plurality of wireless communication protocols is active; and
   convert second outbound data into the second outbound signal when the second
   one of the first plurality of wireless communication protocols is active; and a high frequency to baseband interface operable to couple the baseband processing module to the transmitter module, the local oscillation generation module, and the inbound protocol specific compensation module.

Advantageously, the inbound protocol specific compensation module comprises at least one of:
digital filtering in accordance with the first one of the first plurality of wireless communication protocols;
digital filtering in accordance with the second one of the first plurality of wireless communication protocols;
digital de-rotation in accordance with the first one of the first plurality of wireless communication protocols;
digital gain in accordance with the first one of the first plurality of wireless communication protocols; and
digital gain in accordance with the second one of the first plurality of wireless communication protocols.

According to an aspect, an integrated circuit (IC) comprises:
a first high frequency to low frequency receiver module coupled to convert a first inbound high frequency signal into a first inbound signal independently of a first plurality of wireless communication protocols, wherein the first inbound high frequency signal is formatted in accordance with one of the first plurality of wireless communication protocols and has a carrier frequency within a first set of frequency bands, wherein the first plurality of wireless communication protocols utilizes the first set of frequency bands;
a second high frequency to low frequency receiver module coupled to convert a second inbound high frequency signal into a second inbound signal independently of a second plurality of wireless communication protocols, wherein the second inbound high frequency signal is formatted in accordance with one of the second plurality of wireless communication protocols and has a carrier frequency within a second set of frequency bands, wherein the second plurality of wireless communication protocols utilizes the second set of frequency bands;
an analog low frequency filter and gain module coupled to filter and adjust gain of the first or second inbound signal to produce a filtered and gain adjusted inbound signal;
an analog to digital conversion module coupled to convert the filtered and gain adjusted inbound signal into a digital inbound signal; and
an inbound digital module coupled to convert the digital inbound signal into a first digitally processed inbound signal when the one of the first plurality of wireless communication protocols is active and to convert the digital inbound signal into a second digitally processed inbound signal when the one of the second plurality of wireless communication protocols is active.

Advantageously, the IC further comprises:
a local oscillation module coupled to generate a low band receive local oscillation in accordance with the one of the first plurality of wireless communication protocols and a high band receive local oscillation in accordance with the one of the second plurality of wireless communication protocols.

Advantageously, the first high frequency to low frequency receiver module comprises:
a low noise amplifier module including:
   a first low noise amplifier coupled to amplify the first inbound high frequency signal to produce the first amplified inbound high frequency signal when the first inbound high frequency signal has the carrier frequency within a first frequency band of the first set of frequency bands; and
   a second low noise amplifier coupled to amplify the first inbound high frequency signal to produce the first amplified inbound high frequency signal when the first inbound high frequency signal has the carrier frequency within a second
   frequency band of the first set of frequency bands; and
a mixing module including:
   an in-phase/quadrature (I/Q) mixer coupled to mix the first amplified inbound high frequency signal with an I component of the low band receive local oscillation and to mix the first amplified high frequency signal with a Q component of the low band receive local oscillation to produce an IQ mixed signal; and
   a filtering stage coupled to filter the IQ mixed signal to produce the first inbound signal.

Advantageously, the second high frequency to low frequency receiver module comprises:
a low noise amplifier module including:
   a first low noise amplifier coupled to amplify the second inbound high frequency signal to produce the second amplified inbound high frequency signal when the second inbound high frequency signal has the carrier frequency within a first frequency band of the second set of frequency bands; and
   a second low noise amplifier coupled to amplify the second inbound high frequency signal to produce the second amplified inbound high frequency signal when the second inbound high frequency signal has the carrier frequency within a
   second frequency band of the second set of frequency bands; and a mixing module including:
      an in-phase/quadrature (I/Q) mixer coupled to mix the second amplified inbound high frequency signal with an I component of the high band receive local oscillation and to mix the second amplified high frequency signal with a Q component of the high band receive local oscillation to produce an IQ mixed signal; and
      a filtering stage coupled to filter the IQ mixed signal to produce the second inbound signal.

Advantageously, the inbound digital module comprises at least one of:
digital filtering in accordance with the one of the first or the second plurality of wireless communication protocols;
digital filtering in accordance with a second one of the first or the second plurality of wireless communication protocols;
digital de-rotation in accordance with the one or the second one of the first or the second plurality of wireless communication protocols;
digital gain in accordance with the one of the first or the second plurality of wireless communication protocols;
digital gain in accordance with the second one of the first or the second plurality of wireless communication protocols; and
CMF in accordance with the one or the second one of the first or the second plurality of wireless communication protocols.

According to an aspect, an integrated circuit (IC) comprises:
an outbound digital module coupled to convert a first digital outbound signal into a first digitally processed outbound signal when one of a first or a second plurality of wireless communication protocols is active and to convert a second digital outbound signal into a second digitally processed outbound signal when one of a third plurality of wireless communication protocols is active;
a digital to analog conversion module coupled to convert the first digitally processed outbound signal into a first analog outbound signal and to convert the second digitally processed outbound signal into a second analog outbound signal;
an analog filter module coupled to filter the first analog outbound signal to produce a first filtered outbound signal and to filter the second analog outbound signal to produce a second filtered outbound signal;
a first low frequency to high frequency transmitter module coupled to convert the first filtered outbound signal into a first outbound high frequency signal in accordance with the one of the first plurality of wireless communication protocols;
a second low frequency to high frequency transmitter module coupled to convert the first filtered outbound signal into a second outbound high frequency signal in accordance with the one of the second plurality of wireless communication protocols; and
a third low frequency to high frequency transmitter module coupled to convert the second filtered outbound signal into a third outbound high frequency signal in accordance with the one of the third plurality of wireless communication protocols.

Advantageously, the IC further comprises:
a local oscillation module coupled to generate a low band transmit local oscillation in accordance with the one of the first plurality of wireless communication protocols and a high band transmit local oscillation in accordance with the one of the second plurality of wireless communication protocols.

Advantageously, the first low frequency to high frequency transmitter module comprises:
a mixing module coupled to mix the first filtered outbound signal with the low band transmit local oscillation to produce a first mixed signal; and
a power amplifier driver module coupled to amplify the first mixed signal to produce the first outbound high frequency signal.

Advantageously, the second low frequency to high frequency transmitter module comprises:
a mixing module coupled to mix the first filtered outbound signal with the high band transmit local oscillation to produce a second mixed signal; and
a power amplifier driver module coupled to amplify the second mixed signal to produce the second outbound high frequency signal.

Advantageously, the third low frequency to high frequency transmitter module comprises:
a polar coordinate generation module coupled to convert the second filtered outbound signal into first phase modulation information and first amplitude modulation information when a first one of the third plurality of wireless communication protocols is active, wherein the polar coordinate generation module provides the first phase modulation information to the local oscillation module such that the local oscillation module produces the low band transmit local oscillation having phase modulation; and
a first power amplifier driver module coupled to amplify the low band transmit local oscillation having phase modulation in accordance with the first amplitude modulation to produce the third outbound high frequency signal.

Advantageously, the third low frequency to high frequency transmitter module comprises:
a polar coordinate generation module coupled to convert the second filtered outbound signal into second phase modulation information and second amplitude modulation information when a second one of the third plurality of wireless communication protocols is active, wherein the polar coordinate generation module provides the second phase modulation information to the local oscillation module such that the local oscillation module produces the high band transmit local oscillation having phase modulation; and
a second power amplifier driver module coupled to amplify the high band transmit local oscillation having phase modulation in accordance with the second amplitude modulation to produce the third outbound high frequency signal.

### BRIEF DESCRIPTION OF THE SEVERAL VIEWS OF THE DRAWING(S)

Figure 1 is a schematic block diagram of an embodiment of a high frequency (HF) communication device in accordance with the present invention;
Figure 2 is a diagram of an example of a multiple communication protocols in accordance with the present invention;
Figure 3 is a schematic block diagram of another embodiment of a high frequency (HF) communication device in accordance with the present invention;
Figure 4 is a schematic block diagram of another embodiment of a high frequency (HF) communication device in accordance with the present invention;
Figure 5 is a schematic block diagram of another embodiment of a high frequency (HF) communication device in accordance with the present invention;
Figure 6 is a schematic block diagram of another embodiment of a high frequency (HF) communication device in accordance with the present invention;
Figure 7 is a schematic block diagram of another embodiment of a high frequency (HF) communication device in accordance with the present invention;
Figure 8 is a diagram of an embodiment of a cell phone in accordance with the present invention;
Figure 9 is a schematic block diagram of another embodiment of a cell phone in accordance with the present invention;
Figure 10 is a schematic block diagram of an embodiment of an integrated circuit (IC) in accordance with the present invention;
Figure 11 is a schematic block diagram of an embodiment of a receiver section in accordance with the present invention;
Figure 12 is a schematic block diagram of another embodiment of a receiver section in accordance with the present invention;
Figure 13 is a schematic block diagram of an embodiment of a local oscillation generation module and a transmitter module in accordance with the present invention;
Figure 14 is a schematic block diagram of another embodiment of a transmitter module in accordance with the present invention;
Figure 15 is a schematic block diagram of another embodiment of an integrated circuit (IC) in accordance with the present invention;
Figure 16 is a schematic block diagram of another embodiment of an integrated circuit (IC) in accordance with the present invention; and
Figure 17 is a schematic block diagram of another embodiment of an integrated circuit (IC) in accordance with the present invention.

### DETAILED DESCRIPTION OF THE INVENTION

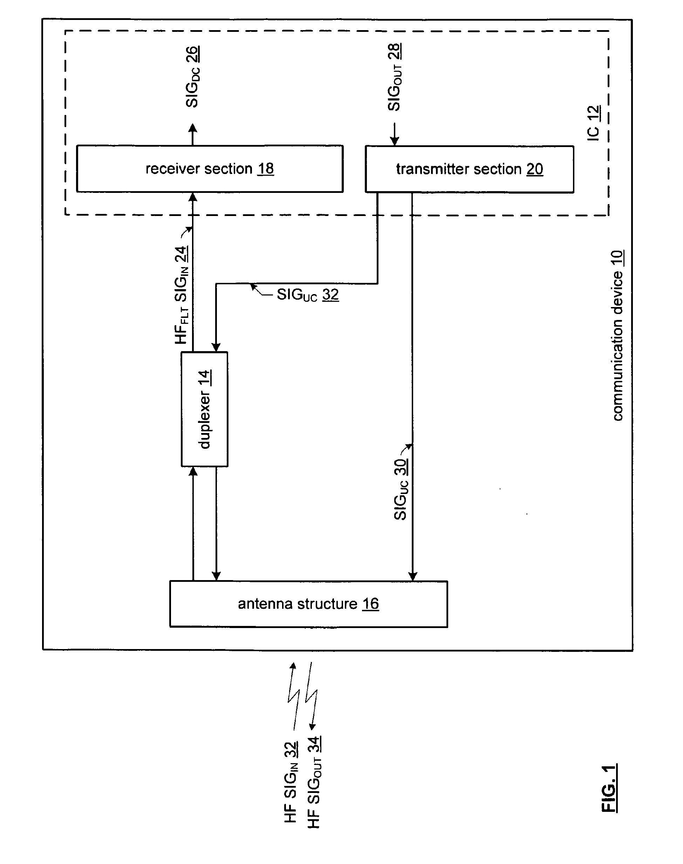

Figure 1 is a schematic block diagram of an embodiment of a high frequency (HF) communication device 10 that includes an integrated circuit (IC) 12, an off-chip multiple protocol duplexer 14, and an antenna structure 16. The IC 12 includes a receiver section 18 and a transmitter section 20. The antenna structure 16, which may include one or more antennas, one or more antenna interfaces, and/or an antenna switch, is coupled to receive an inbound HF signal 22 and to transmit an outbound HF signal 34. The inbound and outbound HF signals 22 and 34 may have a carrier frequency within the same frequency band or within the same set of frequency bands and may be formatted in accordance with one or more of a plurality of wireless communication protocols. For example, the frequency bands may be in the radio frequency band (e.g., 30 HZ to 3 GHz) and/or within the microwave frequency band (e.g., 3 GHz to 300 GHz). As a more specific example, the frequency bands may be 800 MHz, 850 MHz, 900 MHz, 1700 MHz, 1800 MHz, 1900 MHz, 2100 MHz, 2400 MHz, 2600 MHz, 5 GHz, 29 GHz, 60 GHz, etc.

The wireless communication protocols in which the inbound and outbound HF signals 22 and 34 can be formatted may use one or more frequency bands and use one or more data modulation schemes. For example, GSM and GPRS may use a Gaussian Minimum Shift Keying (GMSK) data modulation scheme within any one of a plurality of frequency bands [e.g., GSM 750 (747-762 MHz UL, 777-792 MHz DL); GSM 800|850 (824-849 MHz UL, 869-894 MHz DL, Cellular); Primary GSM 900 (890-915 MHz UL, 935-960 MHz, DL, P-GSM), Extended GSM 900 (880-915 MHz UL, 925-960 MHz, DL, E-GSM); Railway GSM 900 (876-915 MHz UL, 921-960 MHz DL, R-GSM); T-GSM 900 (870.4-876 MHz UL, 915.4-921 MHz DL, T-GSM); DCS 1800 (1710-1785 MHz UL, 1805-1880 MHz DL, DCS); GSM 1900 (1850-1910 MHz UL, 1930-1990 MHz DL, PCS); and maybe WCDMA BAND-III (1920-1980 MHz UL, 2110-2170 MHz DL)].

As another example, wideband CDMA (WCDMA) may use a Quadrature Phase Shift Keying (QPSK) data modulation scheme in any one of a plurality of frequency bands [e.g., WCDMA Band I (IMT 2000, 1920-1980 MHz UL, 2110-2170 MHz DL, UMTS); WCDMA Band II (PCS 1900, 1930-1990 MHz UL, 1850-1910 MHz DL, PCS); WCDMA Band III (1700, 1710-1785 MHz UL, 1805-1880 MHz DL, DCS); WCDMA Band IV (1700, 1710-1755 MHz UL, 2110-2155 MHz DL); WCDMA Band V (850, 824-849 MHz UL, 869-894 MHz DL, US Cellular); WCDMA Band VI (800, 830-840 MHz UL, 875-885 MHz DL, Japan Cellular); WCDMA Band VII (2600, 2500-257 MHz UL, 2620-2690 MHz DL, UMTS2600); WCDMA Band VIII (900, 880-915 MHz UL, 925-960 MHz DL, EGSM); WCDMA Band XI (1700, 1749.9-1784.9 MHz UL, 1844.9-1879.9 MHz DL, Japan)].

As yet another example, EDGE may use an 8-PSK data modulation scheme in any one of the plurality of GSM frequency bands (e.g., 750 MHz, 800 MHz, 850 MHz, 900 MHz, 1800 MHz, 1900 MHz, and/or 2100 MHz). In each of these examples, a wireless communication protocol may correspond to a particular data modulation scheme and any one of the frequency bands.

The antenna section 16 provides an inbound HF signal 22 to the off-chip multiple protocol duplexer 14, which may include a narrow band receive SAW (Surface Acoustic Wave) filter and a narrow band transmit SAW filter. In an embodiment, regardless of the communication protocol formatting of the inbound HF signal 22, the off-chip multiple protocol duplexer 14 filters it to produce a filtered inbound HF signal 24. For example, the duplexer 14 will filter an inbound GSM formatted signal in the same manner that it filters an inbound WCDMA formatted signal.

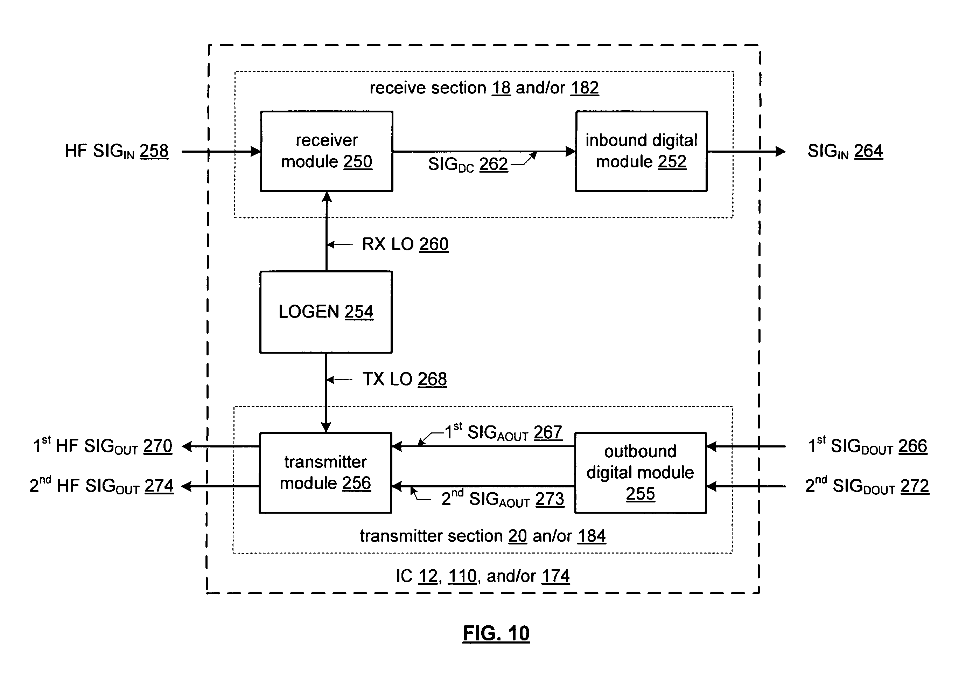

The receiver section 18 (embodiments of which will be described in greater detail with reference to Figures 10-12, 15, and 16) receives the filtered inbound HF signal 24 and converts it into a down converted inbound signal 26 in accordance with the multiple communication protocols. In an embodiment, the receiver section 18 is operable in a receive portion of a first frequency band to support multiple communication protocols. As an example, if the first frequency band corresponds to 850 MHz, then inbound HF signal 22 may be formatted in accordance with GSM 800/850 or WCDMA Band V. In this example, the receiver section receives the filtered inbound HF signal 24 within the corresponding receive band of the first frequency band (e.g., 869-894 MHz down-link (DL) of GSM 800/850 and of WCDMA Band V) and converts it into the down converted signal 26. The down converted signal 26 may be at baseband or near baseband (e.g., has a carrier frequency of up to a few MHz).

For an outbound HF signal 34, the transmitter section 20 (embodiments of which will be described in greater detail with reference to Figures 10, 13-15, and 17) converts an outbound signal 28 into a first up converted signal 30 when a first one of the multiple communication protocols (e.g., GSM 800/850) is active and converts the outbound signal 28 into a second up converted signal 32 when a second one of the multiple communication protocols is active (e.g., WCDMA band V). When the first communication protocol is active, the transmitter section 20 provides the first up converted signal 30 as the outbound HF signal 34 to the antenna structure 16. When the second communication protocol is active, the transmitter section 20 provides the second up converted signal to the multiple protocol off-chip duplexer 14. The duplexer 14 filters the second up converted signal and provides the filtered up converted signal to the antenna structure as the outbound HF signal 34. The antenna structure 16 transmits the outbound HF signal 34 in a transmit portion of the first frequency band (e.g., 824-849 MHz up-link (UL) and of WCDMA Band V).

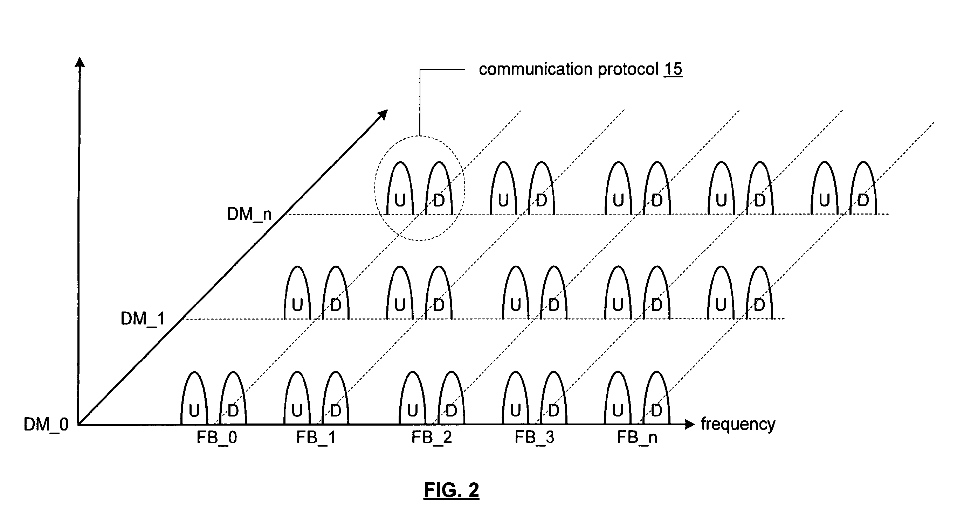

Figure 2 is a diagram of an example of a multiple communication protocols, wherein each protocol 15 corresponds to a particular frequency band or frequency bands and to a particular data modulation scheme (DM_)-n). As shown, each frequency band (FB_0-n) includes an up-link frequency portion (U) and a down-link frequency portion (D). In general, up-link refers to data flowing from a mobile device to a remote server and down-link refers to data flowing from the remote server to the mobile device. Thus, in general, the up-link portion of the frequency band corresponds to the transmit portion and the down-link portion of the frequency band corresponds to the receive portion. However, in some communications, the up-link portion of the frequency band may be used for receiving data and the down-link portion of the frequency band may be used for transmitting data.

As an example, FB_0 may correspond to 800 or 850 MHz, FB_1 may correspond to 900 MHz, FB_2 may correspond to 1800 MHz, FB_3 may correspond to 1900 MHz, and FB_4 may correspond to 2100 MHz. Continuing with this example, DM_0 may correspond to GMSK, DM_1 may correspond to 2-GMSK, DM_2 may correspond to 4-GMSK, DM_3 may correspond to QPSK, and DM_4 may correspond to 8-PSK. Given these parameters, an EDGE communication using 8-PSK at 900 MHz is one communication protocol, an EDGE communication using 8-PSK at 1800 MHz is another communication protocol, a WCDMA communication using QPSK at 900 MHz is yet another communication protocol, a WCDMA communication using QPSK at 1800 MHz is a further communication protocol, etc.

As can be deduced from the preceding examples, there is a substantial number of communication protocols that can be obtain from various combinations of frequency bands and data modulation schemes. In addition to the examples provided above, other data modulation schemes may include, but are not limited to, Amplitude Shift Keying (ASK), Frequency Shift Keying (FSK), frequency modulation (FM), Minimum Shift Keying (MSK), and Quadrature Amplitude Modulation (x-QAM) and other frequency bands may included, but are not limited to, a 2.4 GHz frequency band (e.g., 2.412-2.483 GHz), a 5 GHz frequency band (e.g., 5.15-5.35 GHz and 5.725-5.825 GHz), 1700 MHz, 2000 MHz, 2100 MHz, 2600 MHz, 29 GHz, and 60 GHz.

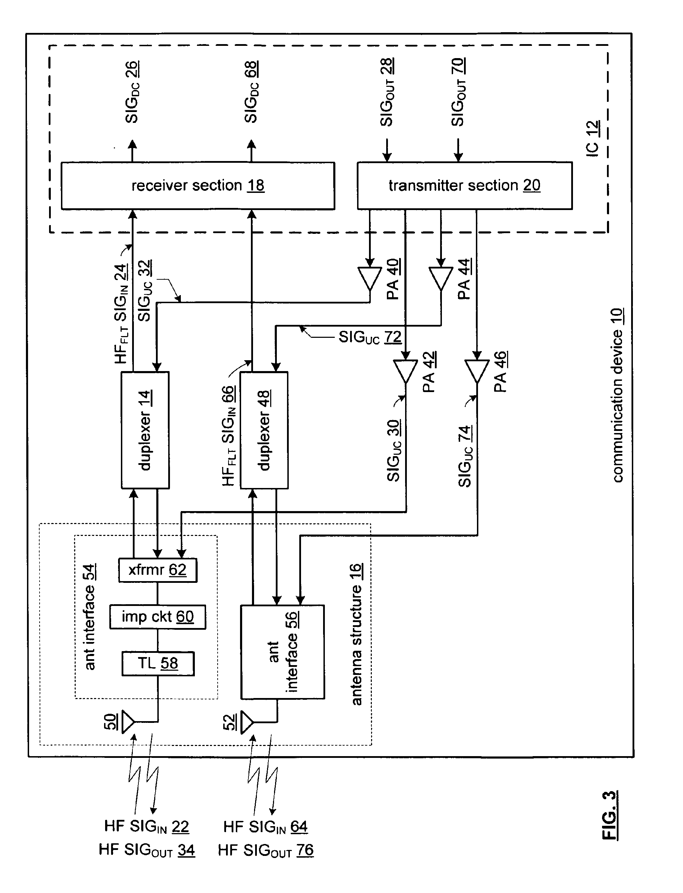

Figure 3 is a schematic block diagram of another embodiment of a high frequency (HF) communication device 10 includes an IC 12, a first duplexer 14, a second duplexer 48, a plurality of off-chip power amplifiers (PA) 40 - 46, and the antenna structure 16. In an embodiment, the antenna structure 16 includes one or more antennas 50-52 (two shown) and one or more antenna coupling circuits 54-56 (two shown). For example, the antenna structure 16 may include an antenna for each frequency band the communication device supports; an antenna for each set of frequency bands the communication device supports (e.g., one antenna for frequency bands 800, 850, and 900 MHz, and a second antenna for frequency bands 1800, 1900, and 2100 MHz); a single antenna for all frequency bands supported by the communication device; or transmit and receive antennas for each frequency band or set of frequency bands the communication device supports. The antenna coupling circuit 54-56 may include a transmission line 58, a transformer balun 62, an impedance matching circuit 60, and/or an antenna switch.

The antenna structure 16 is operable to receive a first inbound HF signal 22 and a second inbound HF signal 64. The first inbound HF signal 22 is formatted in accordance with one of a first plurality of communication protocols (e.g., GSM 800/850, WCDMA Band V, refer to Figure 2 for further examples) and the second inbound HF signal 64 is formatted in accordance with one of a second plurality of communication protocols (e.g., GSM 1900, WCDMA Band II, refer to Figure 2 for further examples). In general, the first inbound HF signal 22 may be of any data modulation (e.g., GMSK, 2-GMSK, 4-GMSK, 8-PSK, MSK, FSK, ASK, etc.) for a given frequency band (e.g., 800/850 MHz) and the second inbound HF signal 64 may be of any data modulation (e.g., QPSK, QAM, BPSK, 8-PSK, etc.) for another frequency band (e.g., 1900 MHz).

When the antenna structure 16 receives the first inbound HF signal 22, it provides the signal 22 to the duplexer 14 and when it receives the second inbound HF signal 64, it provides the signal 64 to a second duplexer 48. The first duplexer 14 functions as previously discussed to filter the first inbound HF signal 22 to produce the filtered inbound HF signal 24. The receiver section 18 functions as previously discussed to convert the filtered inbound HF signal 24 into the first down converted signal 26.

The second duplexer 48, which may include a narrow band receive SAW (Surface Acoustic Wave) filter centered on the receive portion of the second frequency band and a narrow band transmit SAW filter centered on the transmit portion of the second frequency band, filters the second inbound HF signal 64 to produce a second filtered inbound HF signal 66. The off-chip multiple protocol duplexer 48 filters the second inbound HF signal 64 in the same manner regardless of the signal's 64 format. For example, the duplexer 48 will filter an inbound GSM formatted signal in the same manner that it filters an inbound WCDMA formatted signal.

The receiver section 18, which is operable in a receive portion of the second frequency band and supports the second plurality of communication protocols, converts the second filtered inbound signal 66 into a second down converted inbound signal 68 in accordance with the second plurality of communication protocols. As an example, if the second frequency band corresponds to 1900 MHz, then the second inbound HF signal 64 may be formatted in accordance with GSM 1900 or WCDMA Band II. In this example, the receiver section 18 receives the second filtered inbound HF signal 64 within the corresponding receive band of the second frequency band (e.g., 1850-1910 MHz UL, 1930-1990 MHz DL of GSM 1900 or 1930-1990 MHz UL, 1850-1910 MHz DL of WCDMA Band II) and converts it into the second down converted signal 68. The second down converted signal 68 may be at baseband or near baseband (e.g., has a carrier frequency of up to a few MHz).

The transmitter section 20 converts the first outbound signal 28 into the first up converted signal 30 when the first one of the multiple communication protocols (e.g., GSM 800/850) is active and converts the first outbound signal 28 into the second up converted signal 32 when the second one of the multiple communication protocols is active (e.g., WCDMA band V). When the first communication protocol is active, the transmitter section 20 provides the first up converted signal 30 as the outbound HF signal 34 to the antenna structure 16 via the power amplifier (PA) 42. When the second communication protocol is active, the transmitter section 20 provides the second up converted signal to the multiple protocol off-chip duplexer 14 via a PA 40.

The transmitter section 20 also converts a second outbound signal 70 into a third up converted signal 74 when a first one of a second multiple communication protocols (e.g., GSM 1900) is active and converts the second outbound signal 70 into a fourth up converted signal 72 when the second one of the second multiple communication protocols is active (e.g., WCDMA band II). When the first one of the second multiple of communication protocols is active, the transmitter section 20 provides the third up converted signal 74 as a second outbound HF signal 76 to the antenna structure 16 via the off-chip power amplifier (PA) 46. When the second one of the second multiple of communication protocols is active, the transmitter section 20 provides the fourth up converted signal 72 to the second multiple protocol off-chip duplexer 48 via a PA 44. Note that each of the PAs 40-46 may be off-chip (i.e., not on IC 12) and includes one or more power amplifiers coupled in series and/or in parallel.

The duplexer 48 filters the fourth up converted signal 72 and provides the filtered up converted signal to the antenna structure 16 as the second outbound HF signal 76. The antenna structure 16 transmits the second outbound HF signal 76 in a transmit portion of the second frequency band (e.g., 1850-1910 MHz UL of GSM 1900 and of WCDMA Band II).

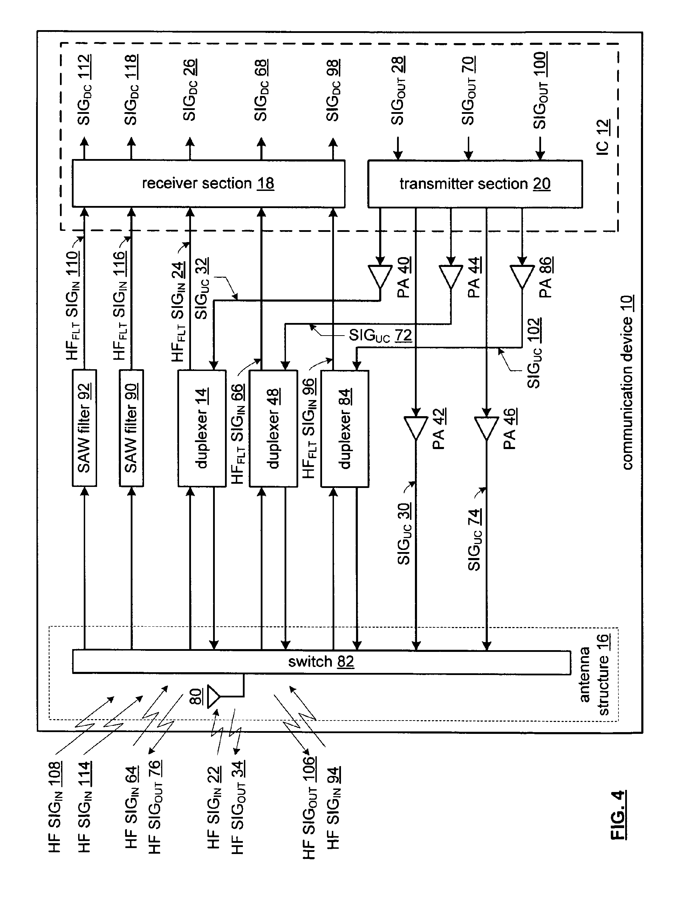

Figure 4 is a schematic block diagram of another embodiment of a high frequency (HF) communication device 10 includes an IC 12, a first duplexer 14, a second duplexer 48, a third duplexer 84, a first receiver SAW filter 90, a second receiver SAW filter 92, a plurality of off-chip power amplifiers (PA) 40 - 46, and 86, and the antenna structure 16. In an embodiment, the antenna structure 16 includes one or more antennas 80 and an antenna switch 82, which may be one or more high frequency switches. The antenna structure 16 is operable to receive a first inbound HF signal 22, a second inbound HF signal 64, a third inbound HF signal 94, a fourth inbound HF signal 108, and/or a fifth inbound HF signal 114.

As an example, the first inbound HF signal 22 is formatted in accordance with one of a first plurality of communication protocols (e.g., GSM 800/850, WCDMA Band V, refer to Figure 2 for further examples), the second inbound HF signal 64 is formatted in accordance with one of a second plurality of communication protocols (e.g., GSM 1900, WCDMA Band II, refer to Figure 2 for further examples), the third inbound HF signal 94 is formatted in accordance with one of a third plurality of communication protocols (e.g., WCDMA Band-III, WCDMA Band I), the fourth inbound HF signal 108 is formatted in accordance with one of a fourth plurality of communication protocols (e.g., GSM 900, GPRS 900, EDGE 900), and the fifth inbound HF signal 114 is formatted in accordance with one of a fifth plurality of communication protocols (e.g., GSM 1800, GPRS 1800, EDGE 1800). In general, the first inbound HF signal 22 may be of any data modulation (e.g., GMSK, 2-GMSK, 4-GMSK, 8-PSK, MSK, FSK, ASK, QPSK, QAM, BPSK, etc.) for a given frequency band (e.g., 800/850 MHz), the second inbound HF signal 64 may be of any data modulation for a second frequency band (e.g., 1900 MHz), the third inbound HF signal 94 may be of any data modulation for a third frequency band (e.g., 2100 MHz), the fourth inbound HF signal 108 may be of any data modulation for a fourth frequency band (e.g., 900 MHz), and the fifth inbound HF signal 114 may be any data modulation for a fifth frequency band (e.g., 1800 MHz).

When the antenna structure 16 receives the first inbound HF signal 22, it provides the signal 22 to the duplexer 14 and when it receives the second inbound HF signal 64, it provides the signal 64 to the second duplexer 48. The first and second duplexers 14 and 48 function as previously discussed to filter the first and second inbound HF signals 22 and 64 to produce the first and second filtered inbound HF signals 24 and 66. The receiver section 18 functions as previously discussed to convert the first filtered inbound HF signal 24 into the first down converted signal 26 and to convert the second filtered inbound HF signal 66 into the second down converted signal 68.

When the antenna structure 16 receives the third inbound HF signal 94, it provides the signal 94 to the third duplexer 84, which may include a narrow band receive SAW (Surface Acoustic Wave) filter centered on the receive portion of the third frequency band (e.g., 2100 MHz) and a narrow band transmit SAW filter centered on the transmit portion of the second frequency band. The third duplexer 84 filters the third inbound HF signal 94 to produce a third filtered inbound HF signal 96. The third off-chip multiple protocol duplexer 84 filters the third inbound HF signal 94 in the same manner regardless of the signal's 94 format. For example, the duplexer 84 will filter an inbound GSM formatted signal in the same manner that it filters an inbound WCDMA formatted signal.

The receiver section 18, which is operable in a receive portion of the third frequency band and supports the third plurality of communication protocols, converts the third filtered inbound signal 96 into a third down converted inbound signal 98 in accordance with the third plurality of communication protocols. As an example, if the third frequency band corresponds to 2100 MHz, then the third inbound HF signal 64 may be formatted in accordance with WCDMA BAND-III or WCDMA Band I. In this example, the receiver section 18 receives the third filtered inbound HF signal 96 within the corresponding receive band of the third frequency band (e.g., 1920-1980 MHz UL, 2110-2170 MHz DL of WCDMA BAND-III or 1920-1980 MHz UL, 2120-2170 MHz DL of WCDMA Band I) and converts it into the third down converted signal 98. The third down converted signal 98 may be at baseband or near baseband (e.g., has a carrier frequency of up to a few MHz).

When the antenna structure 16 receives the fourth inbound HF signal 108, it provides the signal 108 to the first SAW filter 92, which may include a narrow band SAW (Surface Acoustic Wave) filter centered on the receive portion of the fourth frequency band (e.g., 1800 MHz). The first SAW filter 92 filters the fourth inbound HF signal 108 to produce a fourth filtered inbound HF signal 110.

The receiver section 18, which is operable in a receive portion of the fourth frequency band and supports the fourth plurality of communication protocols, converts the fourth filtered inbound signal 110 into a fourth down converted inbound signal 112 in accordance with the fourth plurality of communication protocols. As an example, if the fourth frequency band corresponds to 1800 MHz, then the fourth inbound HF signal 108 may be formatted in accordance with GSM 1800, GPRS 1800, or EDGE 1800. In this example, the receiver section 18 receives the fourth filtered inbound HF signal 110 within the corresponding receive band of the fourth frequency band (e.g., 1805-1880 MHz DL of GSM 1800, GPRS 1800, EDGE 1800) and converts it into the fourth down converted signal 112. The fourth down converted signal 112 may be at baseband or near baseband (e.g., has a carrier frequency of up to a few MHz).

When the antenna structure 16 receives the fifth inbound HF signal 114, it provides the signal 114 to the second SAW filter 90, which may include a narrow band SAW (Surface Acoustic Wave) filter centered on the receive portion of the fifth frequency band (e.g., 900 MHz). The second SAW filter 90 filters the fifth inbound HF signal 114 to produce a fifth filtered inbound HF signal 116.

The receiver section 18, which is operable in a receive portion of the fifth frequency band and supports the fifth plurality of communication protocols, converts the fifth filtered inbound signal 116 into a fifth down converted inbound signal 118 in accordance with the fifth plurality of communication protocols. As an example, if the fifth frequency band corresponds to 900 MHz, then the fifth inbound HF signal 114 may be formatted in accordance with GSM 900, GPRS 900, or EDGE 900. In this example, the receiver section 18 receives the fifth filtered inbound HF signal 116 within the corresponding receive band of the fifth frequency band (e.g., 935-960 MHz DL of GSM 900, GPRS 900, EDGE 900) and converts it into the fifth down converted signal 118. The fifth down converted signal 118 may be at baseband or near baseband (e.g., has a carrier frequency of up to a few MHz).

The transmitter section 20 converts the first outbound signal 28 into the first up converted signal 30 when the first one of the multiple communication protocols (e.g., GSM 800/850, GSM 900) is active and converts the first outbound signal 28 into the second up converted signal 32 when the second one of the multiple communication protocols is active (e.g., WCDMA band V). When the first communication protocol is active, the transmitter section 20 provides the first up converted signal 30 as the outbound HF signal 34 to the antenna structure 16 via the power amplifier (PA) 42. When the second communication protocol is active, the transmitter section 20 provides the second up converted signal to the multiple protocol off-chip duplexer 14 via a PA 40.

The transmitter section 20 also converts the second outbound signal 70 into the third up converted signal 74 when the first one of the second multiple communication protocols (e.g., GSM 1800, GSM 1900, GSM 2100) is active and converts the second outbound signal 70 into the fourth up converted signal 72 when the second one of the second multiple communication protocols is active (e.g., WCDMA band II). When the first one of the second multiple of communication protocols is active, the transmitter section 20 provides the third up converted signal 74 as the second outbound HF signal 76 to the antenna structure 16 via the off-chip power amplifier (PA) 46. When the second one of the second multiple of communication protocols is active, the transmitter section 20 provides the fourth up converted signal 72 to the second multiple protocol off-chip duplexer 48 via a PA 44.

The transmitter section 20 also converts a third outbound signal 100 into a fifth up converted signal (not shown) when a first one of a third multiple communication protocols (e.g., WCDMA BAND-III) is active and converts the third outbound signal 100 into a sixth up converted signal 102 when the second one of the third multiple communication protocols is active (e.g., WCDMA band I). When the first one of the second multiple of communication protocols is active, the transmitter section 20 provides the fifth up converted signal as a third outbound HF signal 106 to the antenna structure 16 via an off-chip power amplifier (PA) (not shown). When the second one of the second multiple of communication protocols is active, the transmitter section 20 provides the sixth up converted signal 102 to the third multiple protocol off-chip duplexer 84 via a PA 86.

The duplexer 84 filters the sixth up converted signal 102 and provides the filtered up converted signal to the antenna structure 16 as the third outbound HF signal 106. The antenna structure 16 transmits the third outbound HF signal 106 in a transmit portion of the third frequency band (e.g., 1920-1980 MHz UL, 2110-2170 MHz DL of WCDMA BAND-III or of WCDMA Band I).

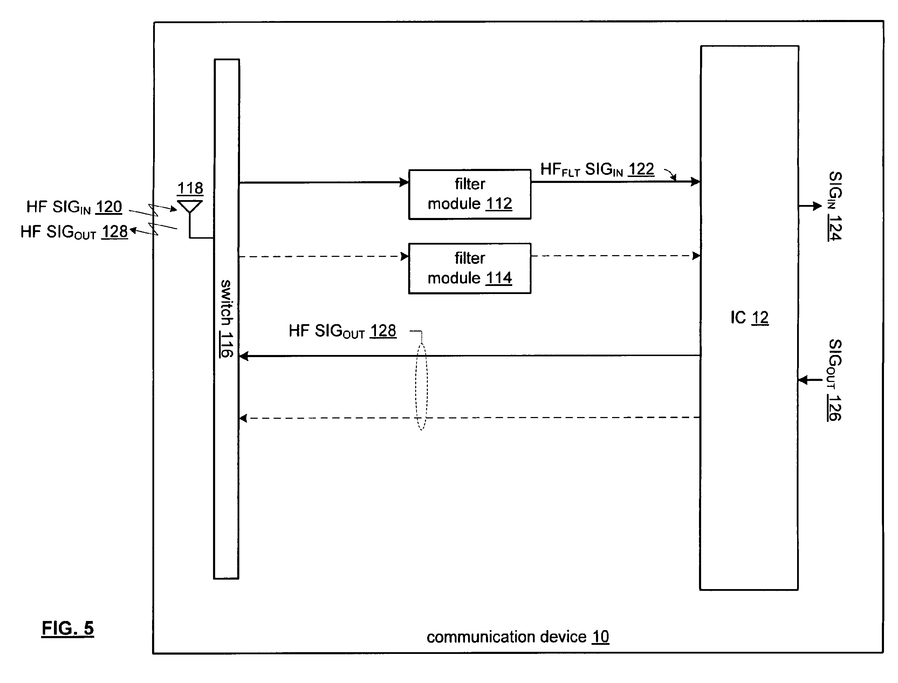

Figure 5 is a schematic block diagram of another embodiment of a high frequency (HF) communication device 10 that includes an integrated circuit (IC) 12, a plurality of filtering modules 112-114, an antenna switch 116, and an antenna section 118. The antenna section 118 may include one or more antennas and may further include one or more antenna interface modules. An antenna interface module may include an impedance matching circuit, a transformer balun, and/or a transmission line. In an embodiment, the number of off chip inbound filter modules 112-114 is equal to or less than the number communication protocols supported by the communication device. For example, if the communication device 10 supports GSM 800/850, GSM 900, GSM 1800, GSM 1900, WCDMA Band I, WCDMA Band II, and WCDMA Band V (i.e., a total of 7 communication protocols), the number of filtering modules 112-114 will be seven or less (e.g., five filtering modules: three off-chip duplexers and two off-chip SAW filters).

The antenna section 118 is coupled to receive one of a plurality of inbound HF signals 120 and to transmit one of a plurality of outbound HF signals 128. The plurality of inbound HF signals 120 includes signals formatted in accordance with one or more communication protocols of a plurality of sets of communication protocols, where a set of communication protocols has a common frequency band. For example a first set of communication protocols having a common frequency band (e.g., 800/850 MHz) may include, but is not limited to, GSM 800/850, WCDMA Band V, EDGE 800/850, and GPRS 800/850; a second set of communication protocols having a common frequency band (e.g., 1900 MHz) may include, but is not limited to, GSM 1900, EDGE 1900, GPRS 1900, WCDMA Band II; a third set of communication protocols having a common frequency band (e.g., 2100 MHz) includes, but is not limited to, WCDMA BAND-III, WCDMA Band I; a fourth set of communication protocols having a common frequency band (e.g., 900 MHz) includes, but is not limited to, GSM 900, EDGE 900, GRPS 900, RFID; and a fifth set of communication protocols having a common frequency band (e.g., 1800 MHz) includes, but is not limited to, GSM 1800, EDGE 1800, GRPS 1800. In general, the inbound HF signals 120 are frequency band dependent and communication standard (or data modulation scheme) independent.

The plurality of outbound HF signals 128 includes signals formatted in accordance with one or more communication protocols of a plurality of sets of communication protocols. For example, a first set of communication protocols includes, but is not limited to, WCDMA Band I - Band IV and WCDMA Band IX; a second set of communication protocols includes, but is not limited to, WCDMA Band V, Band VI, and Band VII; a third set of communication protocols includes, but is not limited to, GSM 800/850, GSM 900, Extended GSM 900, Railway GSM 900, T-GSM; and a fourth set of communication protocols includes, but is not limited to, GSM 1800, GSM 1900, WCDMA BAND-III. In general, the outbound HF signals 128 are frequency band independent and communication standard (or data modulation scheme) dependent.

Depending on the communication protocol of the inbound HF signal 120 (e.g., the mode of the communication device), the antenna switch 116 provides the inbound HF signal 120 to the appropriate filtering module 112-114; each of which may include a narrow band SAW filter and/or a narrow band duplexer. For example, when the communication device is to receive a GSM 800/850 (e.g., a first protocol of a first set) or WCDMA Band V (e.g., a second protocol of the first set) formatted communication, the antenna switch 116 provides the received inbound HF signal 120 to the filter module 112-114 that has a band pass filter response centered about the receive portion of the 800 - 850 MHz frequency band. The appropriate inbound filter module 112-114 (e.g., module 112) filters the inbound HF signal 120 to produce a filtered inbound HF signal 122.

The IC 12 receives the filtered inbound HF signal 122 and converts it into a down converted signal 124 in accordance with the one of the plurality of communication protocols. For example, the filtered inbound HF signal 122, which may be expressed as A_{IN}(t)*cos(ω_{HFIN}(t) + θ_{IN}(t)), may be directly converted, or through multiple intermediate frequency stages, to a baseband signal 124, which may be expressed A_{IN}(t)*cos( θ_{IN}(t)), where A_{IN}(t) represents amplitude information, ω_{HFIN}(t) represents the carrier frequency of the inbound HF signal 122, and θ_{IN}(t) represents phase information.

The IC 12 also converts an outbound signal 126 into one of a plurality of up converted signals in accordance with a selected one of the plurality of communication protocols. For example, the outbound signal 126 may be a baseband signal, which may be expressed as A_{OUT}(t)*cos( θ_{OUT}(t)), that is directly converted, or through a plurality of intermediate frequency stages, into the outbound HF signal 128, which may be expressed as A_{OUT}(t)*cos(ω_{HFOUT_n}(t) + θ_{OUT}(t)), where ω_{HFOUT_n} represents the carrier frequency of the outbound HF signal 128. The IC 12 provides the outbound HF signal 128 to the antenna switch 116, which, in turn, provides the signal 128 to the antenna section 118 for transmission.

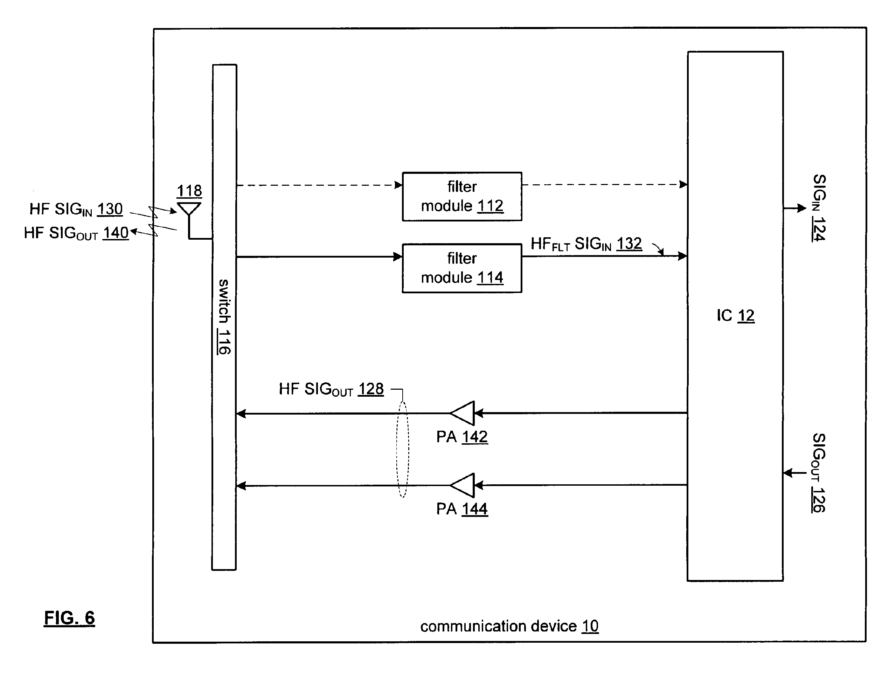

Figure 6 is a schematic block diagram of another embodiment of a high frequency (HF) communication device 10 that includes an integrated circuit (IC) 12, a plurality of filtering modules 112-114, an antenna switch 116, an antenna section 118, and a plurality of off-chip power amplifiers (PA) 142-144. As in Figure 5, the number of off chip inbound filter modules 112-114 is equal to or less than the number communication protocols supported by the communication device.

The antenna section 118 is coupled to receive one of a plurality of inbound HF signals 130 and to transmit one of a plurality of outbound HF signals 140. The plurality of inbound HF signals 130 includes signals formatted in accordance with one or more communication protocols of the second set of communication protocols having a common frequency band. The plurality of outbound HF signals 140 includes signals formatted in accordance with one or more communication protocols corresponding to the second set of communication protocols. As mentioned in an example of Figure 5, a second set of communication protocols having a common frequency band (e.g., 1900 MHz) may include, but is not limited to, GSM 1900, EDGE 1900, GPRS 1900, WCDMA Band II.

In accordance with the second set of communication protocols, the antenna switch 116 provides the inbound HF signal 130 to the appropriate filtering module 112-114 (e.g., module 114. For instance, when the communication device is to receive a GSM 1900 (e.g., a first protocol of the second set) or WCDMA Band II (e.g., a second protocol of the second set) formatted communication, the antenna switch 116 provides the received inbound HF signal 130 to the filter module 114. The inbound filter module 114, which has a band pass filter response centered about the receive portion of the 1900 MHz frequency band, filters the inbound HF signal 130 to produce a filtered inbound HF signal 132.

The IC 12 receives the filtered inbound HF signal 132 and converts it into a down converted signal 124 in accordance with the one of the plurality of communication protocols in the second set. For example, the filtered inbound HF signal 132, which may be expressed as A_{IN}(t)*cos(ω_{HFIN_2}(t) + θ_{IN}(t)), may be directly converted, or through multiple intermediate frequency stages, to a baseband signal 124, which may be expressed A_{IN}(t)*cos( θ_{IN}(t)), where A(t) represents amplitude information, ω_{HFIN_2}(t) represents the carrier frequency of the inbound HF signal 132 used by protocols in the second set, and θ_{IN}(t) represents phase information.

The IC 12 also converts an outbound signal 126 into one of a plurality of up converted signals in accordance with a selected one of the communication protocols in the second set. For example, the outbound signal 126 may be a baseband signal, which may be expressed as A_{OUT}(t)*cos( θ_{OUT}(t)), that is directly converted, or through a plurality of intermediate frequency stages, into the outbound HF signal 140, which may be expressed as A_{OUT}(t)*cos(ω_{HFOUT_n}(t) + θ_{OUT}(t)), where ω_{HFOUT_n} represents the carrier frequency of the outbound HF signal 140 used by the second set of protocols. The IC 12 provides the outbound HF signal 128 to the antenna switch 116 via a power amplifier 144. The antenna switch 116 provides the outbound HF signal 140 to the antenna section 118 for transmission. Note that power amplifier 142 may be used to amplify the outbound HF signal 128 generated by the IC 12 as described with reference to Figure 5.

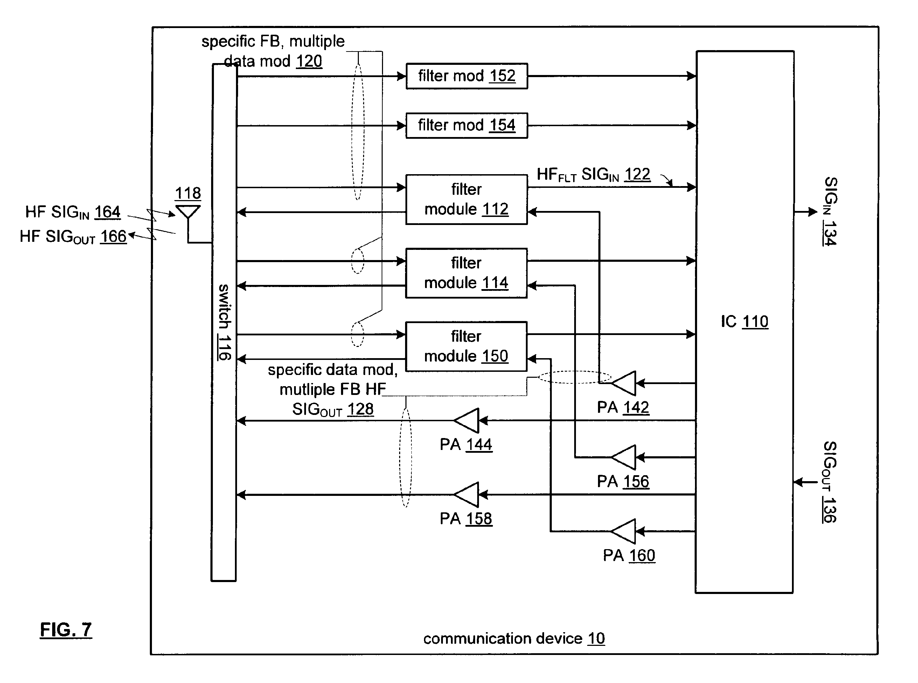

Figure 7 is a schematic block diagram of another embodiment of a high frequency (HF) communication device 10 that includes an integrated circuit (IC) 110, a plurality of filtering modules 112-114 and 150-154, an antenna switch 116, an antenna section 118, and a plurality of off-chip power amplifiers (PA) 142-144 and 156-160. In an embodiment, the number of off chip inbound filter modules 112-114 and 150-154 is equal to or less than the number communication protocols supported by the communication device. For example, if the communication device 10 supports GSM 800/850, GSM 900, GSM 1800, GSM 1900, WCDMA Band I, WCDMA Band II, and WCDMA Band V (i.e., a total of 7 communication protocols), the communication device 10 includes five filtering modules 112-114 and 150-154 (e.g., one for GSM 800/850 and WCDMA Band V; a second for GSM 1900 and WCDMA Band II, a third for WCDMA BAND-III and WCDMA Band I, a fourth for GSM 900, and a fifth for GSM 1800).

The antenna section 118 is coupled to receive one of a plurality of inbound HF signals 164 and to transmit one of a plurality of outbound HF signals 166. The plurality of inbound HF signals 120 includes signals formatted in accordance with one or more communication protocols of a plurality of sets of communication protocols, where a set of communication protocols has a common frequency band. The plurality of outbound HF signals 128 includes signals formatted in accordance with one or more communication protocols of a plurality of sets of communication protocols. Examples were provided with the discussion of Figure 5.

In accordance with one of the sets of communication protocols, the antenna switch 116 provides the inbound HF signal 120 to the appropriate filtering module 112-114 and 150-154. For example, when the communication device is to receive a GSM 800/850 (e.g., a first protocol of the first set), WCDMA Band V (e.g., a second protocol of the first set), EDGE 800/850 (e.g., a third protocol of the first set), and GPRS 800/850 (e.g., a fourth protocol of the first set) formatted communication, the antenna switch 116 provides the received inbound HF signal 164 to the first filter module 112, which may be a duplexer. When the communication device 10 is to receive a GSM 1900 (e.g., a first protocol of the second set), EDGE 1900 (e.g., a second protocol of the second set), GPRS 1900 (e.g., a third protocol of the second set), or WCDMA Band II (e.g., a fourth protocol of the second set) formatted communication, the antenna switch 116 provides the received inbound HF signal 120 to the second filter module 114, which may be a duplexer.

Continuing with the preceding example, when the communication device 10 is to receive a WCDMA BAND-III or WCDMA Band I formatted communication, the antenna switch 116 provides the inbound HF signal 164 to the third filter module 150, which may be a duplexer. When the communication device 10 is to receive a GSM 900, EDGE 900, GRPS 900, or RFID formatted communication, the antenna switch 116 provides the inbound HF signal to the fourth filtering module 152, which may be a SAW filter. When the communication device 10 is to receive a GSM 1800, EDGE 1800, or GRPS 1800 formatted communication, the antenna switch 116 provides the inbound HF signal 164 to the fifth filtering module 154, which may be a SAW filter. With respect to the IC 110, the plurality of inbound HF signals 164 is generally frequency band dependent and communication standard (or data modulation scheme) independent.

The respective inbound filter module 112-114 and 150-154 filters the inbound HF signal 164 to produce a filtered inbound HF signal. The IC 110 receives the filtered inbound HF signal and converts it into a down converted signal 134 in accordance with the one of the plurality of communication protocols in the various sets.

The IC 110 also converts an outbound signal 136 into one of a plurality of up converted signals 128 in accordance with a selected one of the communication protocols in the various sets. The IC 110 provides the outbound HF signal 128 to the antenna at least one of power amplifiers 142, 144, 156, 158, or 160. Power amplifiers 144, 158, or 162 amplify and provide the outbound HF signal 128 to a corresponding duplexer, or filter module, 112, 114, or 150. The corresponding duplexers, or filter module, 112, 114, or 150 filters the up converted signal to produce a corresponding outbound HF signal, which is provided to the antenna switch 116. The antenna switch 116 provides the outbound HF signal 128 to the antenna section 118 for transmission and the outbound HF signal 166. With respect to the IC 110, the plurality of outbound HF signals 128 is generally frequency band independent and communication standard (or data modulation scheme) dependent.

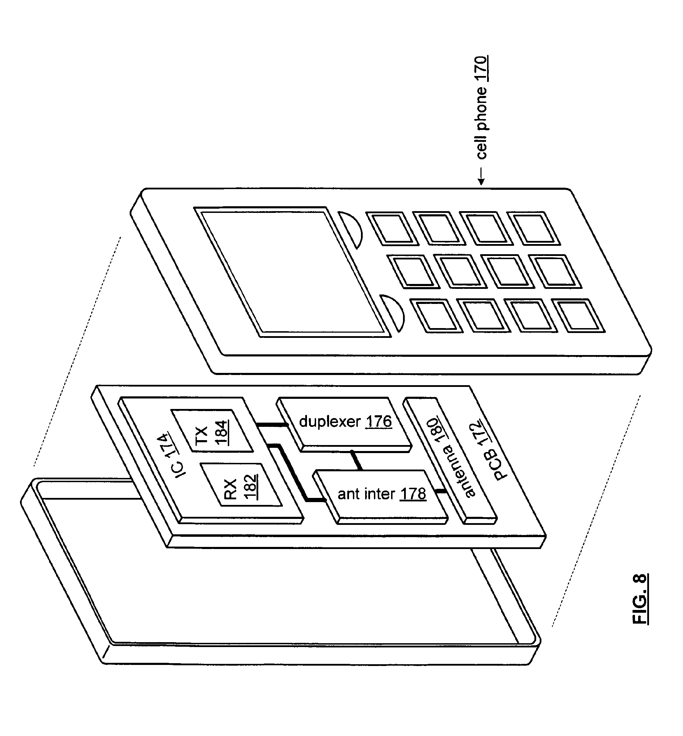

Figure 8 is a diagram of an embodiment of a cell phone 170 that includes a printed circuit board (PCB) 172. The PCB 172 includes thereon an integrated circuit (IC) 174, a duplexer 176 (which may alternatively be a SAW filter), an antenna interface 178, and an antenna section 180. The IC 174 includes a receiver section 182 and a transmitter section 184. The antenna structure 180, which may include one or more antennas and the antenna interface 178 may include one or more antenna interfaces and/or an antenna switch. The antenna interface 178 may include a transmission line, an impedance matching circuit, and/or a transformer balun.

The antenna section 180 is coupled to receive an inbound HF signal and to transmit an outbound HF signal. The inbound and outbound HF signals may have a carrier frequency within the same frequency band or within the same set of frequency bands and may be formatted in accordance with one or more of a plurality of wireless communication protocols. For example, the frequency bands may be in the radio frequency band (e.g., 30 Hz to 3 GHz) and/or within the microwave frequency band (e.g., 3 GHz to 300 GHz). As a more specific example, the frequency bands may be 800 MHz, 850 MHz, 900 MHz, 1700 MHz, 1800 MHz, 1900 MHz, 2100 MHz, 2400 MHz, 2600 MHz, 5 GHz, 29 GHz, 60 GHz, etc.

The wireless communication protocols in which the inbound and outbound HF signals and can be formatted may use one or more frequency bands and use one or more data modulation schemes. For example, GSM and GPRS may use a Gaussian Minimum Shift Keying (GMSK) data modulation scheme within any one of a plurality of frequency bands [e.g., GSM 750 (747-762 MHz UL, 777-792 MHz DL); GSM 800|850 (824-849 MHz UL, 869-894 MHz DL, Cellular); Primary GSM 900 (890-915 MHz UL, 935-960 MHz, DL, P-GSM), Extended GSM 900 (880-915 MHz UL, 925-960 MHz, DL, E-GSM); Railway GSM 900 (876-915 MHz UL, 921-960 MHz DL, R-GSM); T-GSM 900 (870.4-876 MHz UL, 915.4-921 MHz DL, T-GSM); DCS 1800 (1710-1785 MHz UL, 1805-1880 MHz DL, DCS); GSM 1900 (1850-1910 MHz UL, 1930-1990 MHz DL, PCS)].

As another example, wideband CDMA (WCDMA) may use a Quadrature Phase Shift Keying (QPSK) data modulation scheme in any one of a plurality of frequency bands [e.g., WCDMA Band I (IMT 2000, 1920-1980 MHz UL, 2110-2170 MHz DL, UMTS); WCDMA Band II (PCS 1900, 1930-1990 MHz UL, 1850-1910 MHz DL, PCS); WCDMA Band III (1700, 1710-1785 MHz UL, 1805-1880 MHz DL, DCS); WCDMA Band IV (1700, 1710-1755 MHz UL, 2110-2155 MHz DL); WCDMA Band V (850, 824-849 MHz UL, 869-894 MHz DL, US Cellular); WCDMA Band VI (800, 830-840 MHz UL, 875-885 MHz DL, Japan Cellular); WCDMA Band VII (2600, 2500-257 MHz UL, 2620-2690 MHz DL, UMTS2600); WCDMA Band VIII (900, 880-915 MHz UL, 925-960 MHz DL, EGSM); WCDMA Band XI (1700, 1749.9-1784.9 MHz UL, 1844.9-1879.9 MHz DL, Japan)].

As yet another example, EDGE may use an 8-PSK data modulation scheme in any one of the plurality of GSM frequency bands (e.g., 750 MHz, 800 MHz, 850 MHz, 900 MHz, 1800 MHz, 1900 MHz, and/or 2100 MHz). In each of these examples, a wireless communication protocol may correspond to a particular data modulation scheme and any one of the frequency bands.

The antenna section 180 provides the inbound HF signal to the off-chip multiple protocol duplexer 176, which may include a narrow band receive SAW (Surface Acoustic Wave) filter and a narrow band transmit SAW filter. Regardless of the communication protocol formatting (e.g., GSM based formatting or WCDMA based formatting) of the inbound HF signal, the off-chip multiple protocol duplexer 176 filters it to produce a filtered inbound HF signal. For example, the duplexer 176 will filter an inbound GSM formatted signal in the same manner that it filters an inbound WCDMA formatted signal.

The receiver section 182 (embodiments of which will be described in greater detail with reference to Figures 10-12, 15, and 16) receives the filtered inbound HF signal and converts it into a down converted inbound signal in accordance with a GSM based (which includes GPRS and EDGE) or WCDMA based (which includes HSPA) communication protocol. In an embodiment, the receiver section 182 is operable in a receive portion of a first frequency band to support multiple communication protocols. As an example, if the first frequency band corresponds to 850 MHz, then inbound HF signal may be formatted in accordance with GSM 800/850 or WCDMA Band V. In this example, the receiver section receives the filtered inbound HF signal within the corresponding receive band of the first frequency band (e.g., 869-894 MHz down-link (DL) of GSM 800/850 and of WCDMA Band V) and converts it into the down converted signal. The down converted signal may be at baseband or near baseband (e.g., has a carrier frequency of up to a few MHz).

For an outbound HF signal, the transmitter section 184 (embodiments of which will be described in greater detail with reference to Figures 10, 13-15, and 17) converts an outbound signal into a first up converted signal when a GSM based communication protocol (e.g., GSM 800/850) is active and converts the outbound signal into a second up converted signal when a WCDMA based communication protocol is active (e.g., WCDMA band V). When the GSM based communication protocol is active, the transmitter section 184 provides the first up converted signal as the outbound HF signal to the antenna structure 180. When the WCDMA based communication protocol is active, the transmitter section 184 provides the second up converted signal to the multiple protocol off-chip duplexer 176. The duplexer 176 filters the second up converted signal and provides the filtered up converted signal to the antenna structure 180 as the outbound HF signal. The antenna structure 180 transmits the outbound HF signal in a transmit portion of the first frequency band (e.g., 824-849 MHz up-link (UL) and of WCDMA Band V).

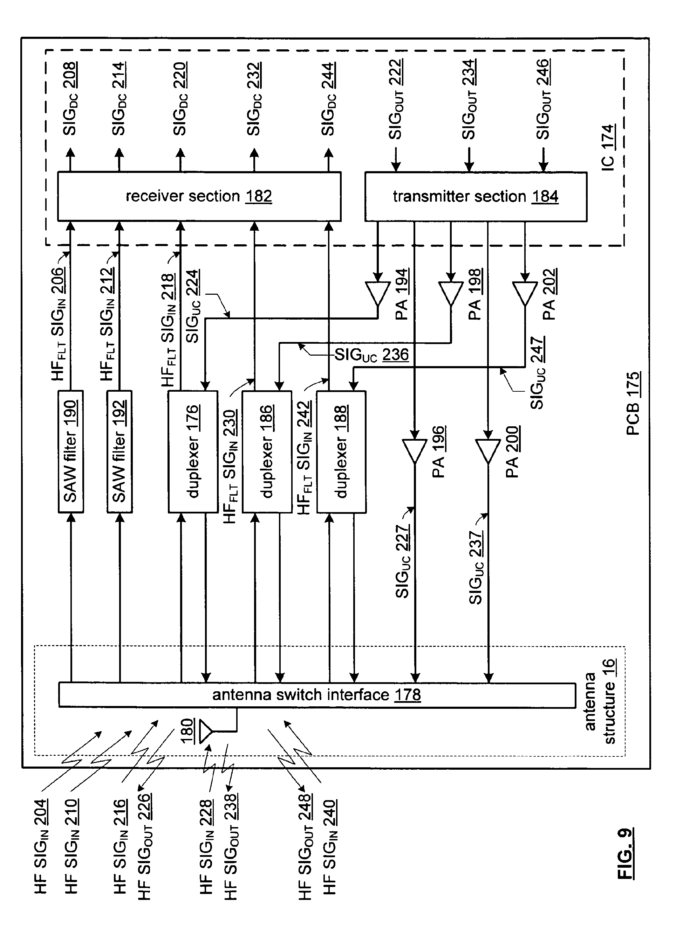

Figure 9 is a schematic block diagram of another embodiment of at least a portion of a cell phone 170 includes an IC 174, a first duplexer 176, a second duplexer 186, a third duplexer 188, a first receiver SAW filter 190, a second receiver SAW filter 192, a plurality of off-chip power amplifiers (PA) 194-202, an antenna structure 16. In an embodiment, the antenna structure 16 includes one or more antennas 180 and an antenna switch 178, which may be one or more high frequency switches. The antenna structure 16 is operable to receive a first inbound HF signal 216, a second inbound HF signal 228, a third inbound HF signal 240, a fourth inbound HF signal 204, and/or a fifth inbound HF signal 210.

As an example, the first inbound HF signal 216 is formatted in accordance with one of a first plurality of communication protocols (e.g., GSM 800/850, WCDMA Band V, refer to Figure 2 for further examples), the second inbound HF signal 228 is formatted in accordance with one of a second plurality of communication protocols (e.g., GSM 1900, WCDMA Band II, refer to Figure 2 for further examples), the third inbound HF signal 240 is formatted in accordance with one of a third plurality of communication protocols (e.g., WCDMA BAND-III, WCDMA Band I), the fourth inbound HF signal 204 is formatted in accordance with one of a fourth plurality of communication protocols (e.g., GSM 900, GPRS 900, EDGE 900), and the fifth inbound HF signal 210 is formatted in accordance with one of a fifth plurality of communication protocols (e.g., GSM 1800, GPRS 1800, EDGE 1800). In general, the first inbound HF signal 216 may be of any data modulation (e.g., GMSK, 2-GMSK, 4-GMSK, 8-PSK, MSK, FSK, ASK, QPSK, QAM, BPSK, etc.) for a given frequency band (e.g., 800/850 MHz), the second inbound HF signal 228 may be of any data modulation for a second frequency band (e.g., 1900 MHz), the third inbound HF signal 240 may be of any data modulation for a third frequency band (e.g., 2100 MHz), the fourth inbound HF signal 204 may be of any data modulation for a fourth frequency band (e.g., 900 MHz), and the fifth inbound HF signal 210 may be any data modulation for a fifth frequency band (e.g., 1800 MHz).

When the antenna structure 16 receives the first inbound HF signal 216, it provides the signal 216 to the duplexer 176, which may include a narrow band receive SAW (Surface Acoustic Wave) filter and a narrow band transmit SAW filter. In an embodiment, regardless of the communication protocol formatting of the inbound HF signal 216, the off-chip multiple protocol duplexer 176 filters it to produce a filtered inbound HF signal 218. For example, the duplexer 176 will filter an inbound GSM formatted signal in the same manner that it filters an inbound WCDMA formatted signal.

The receiver section 182 (embodiments of which will be described in greater detail with reference to Figures 10-12, 15, and 16) receives the filtered inbound HF signal 218 and converts it into a first down converted inbound signal 220 in accordance with the one of the multiple communication protocols. In an embodiment, the receiver section 182 is operable in a receive portion of a first frequency band to support multiple communication protocols. As an example, if the first frequency band corresponds to 850 MHz, then inbound HF signal 216 may be formatted in accordance with GSM 800/850 or WCDMA Band V. In this example, the receiver section 182 receives the filtered inbound HF signal 218 within the corresponding receive band of the first frequency band (e.g., 869-894 MHz down-link (DL) of GSM 800/850 and of WCDMA Band V) and converts it into the down converted signal 220. The down converted signal 220 may be at baseband or near baseband (e.g., has a carrier frequency of up to a few MHz).

When the antenna structure 16 receives the second inbound HF signal 228, it provides the signal 228 to the second duplexer 186. The second duplexer 186, which may include a narrow band receive SAW (Surface Acoustic Wave) filter centered on the receive portion of the second frequency band and a narrow band transmit SAW filter centered on the transmit portion of the second frequency band, filters the second inbound HF signal 228 to produce a second filtered inbound HF signal 230. The off-chip multiple protocol duplexer 186 filters the second inbound HF signal 228 in the same manner regardless of the signal's 228 format. For example, the duplexer 186 will filter an inbound GSM formatted signal in the same manner that it filters an inbound WCDMA formatted signal.

The receiver section 182, which is operable in a receive portion of the second frequency band and supports the second plurality of communication protocols, converts the second filtered inbound signal 230 into a second down converted inbound signal 232 in accordance with the second plurality of communication protocols. As an example, if the second frequency band corresponds to 1900 MHz, then the second inbound HF signal 228 may be formatted in accordance with GSM 1900 (which may include EDGE and GPRS) or WCDMA Band II (which may include HSPA). In this example, the receiver section 182 receives the second filtered inbound HF signal 230 within the corresponding receive band of the second frequency band (e.g., 1930-1990 MHz DL of GSM 1900 or WCDMA Band II) and converts it into the second down converted signal 232. The second down converted signal 232 may be at baseband or near baseband (e.g., has a carrier frequency of up to a few MHz).

When the antenna structure 16 receives the third inbound HF signal 240, it provides the signal 240 to the third duplexer 188, which may include a narrow band receive SAW (Surface Acoustic Wave) filter centered on the receive portion of the third frequency band (e.g., 2100 MHz) and a narrow band transmit SAW filter centered on the transmit portion of the second frequency band. The third duplexer 188 filters the third inbound HF signal 240 to produce a third filtered inbound HF signal 242. The third off-chip multiple protocol duplexer 188 filters the third inbound HF signal 240 in the same manner regardless of the signal's 240 format.

The receiver section 182, which is operable in a receive portion of the third frequency band and supports the third plurality of communication protocols, converts the third filtered inbound signal 242 into a third down converted inbound signal 244 in accordance with the third plurality of communication protocols. As an example, if the third frequency band corresponds to 2100 MHz, then the third inbound HF signal 240 may be formatted in accordance with WCDMA BAND-III or WCDMA Band I. In this example, the receiver section 182 receives the third filtered inbound HF signal 242 within the corresponding receive band of the third frequency band (e.g., 2110-2170 MHz DL of WCDMA Band I) and converts it into the third down converted signal 244. The third down converted signal 244 may be at baseband or near baseband (e.g., has a carrier frequency of up to a few MHz).

When the antenna structure 16 receives the fourth inbound HF signal 204, it provides the signal 204 to the first SAW filter 190, which may include a narrow band SAW (Surface Acoustic Wave) filter centered on the receive portion of the fourth frequency band (e.g., 1800 MHz). The first SAW filter 190 filters the fourth inbound HF signal 204 to produce a fourth filtered inbound HF signal 206.

The receiver section 182, which is operable in a receive portion of the fourth frequency band and supports the fourth plurality of communication protocols, converts the fourth filtered inbound signal 206 into a fourth down converted inbound signal 208 in accordance with the fourth plurality of communication protocols. As an example, if the fourth frequency band corresponds to 1800 MHz, then the fourth inbound HF signal 204 may be formatted in accordance with GSM 1800, GPRS 1800, or EDGE 1800. In this example, the receiver section 182 receives the fourth filtered inbound HF signal 206 within the corresponding receive band of the fourth frequency band (e.g., 1805-1880 MHz DL of GSM 1800, GPRS 1800, EDGE 1800) and converts it into the fourth down converted signal 208. The fourth down converted signal 208 may be at baseband or near baseband (e.g., has a carrier frequency of up to a few MHz).

When the antenna structure 16 receives the fifth inbound HF signal 210, it provides the signal 210 to the second SAW filter 192, which may include a narrow band SAW (Surface Acoustic Wave) filter centered on the receive portion of the fifth frequency band (e.g., 900 MHz). The second SAW filter 192 filters the fifth inbound HF signal 210 to produce a fifth filtered inbound HF signal 212.

The receiver section 182, which is operable in a receive portion of the fifth frequency band and supports the fifth plurality of communication protocols, converts the fifth filtered inbound signal 212 into a fifth down converted inbound signal 214 in accordance with the fifth plurality of communication protocols. As an example, if the fifth frequency band corresponds to 900 MHz, then the fifth inbound HF signal 210 may be formatted in accordance with GSM 900, GPRS 900, or EDGE 900. In this example, the receiver section 182 receives the fifth filtered inbound HF signal 212 within the corresponding receive band of the fifth frequency band (e.g., 935-960 MHz DL of GSM 900, GPRS 900, EDGE 900) and converts it into the fifth down converted signal 214. The fifth down converted signal 214 may be at baseband or near baseband (e.g., has a carrier frequency of up to a few MHz).

The transmitter section 184 converts the first outbound signal 222 into the first up converted signal 227 when the first one of the multiple communication protocols (e.g., GSM 800/850, GSM 900) is active and converts the first outbound signal 222 into the second up converted signal 224 when the second one of the multiple communication protocols is active (e.g., WCDMA band V). When the first communication protocol is active, the transmitter section 184 provides the first up converted signal 227 as the outbound HF signal 226 to the antenna structure 16 via the power amplifier (PA) 196. When the second communication protocol is active, the transmitter section 184 provides the second up converted signal 224 to the multiple protocol off-chip duplexer 176 via a PA 194.

The duplexer 176 filters the second up converted signal and provides the filtered up converted signal to the antenna structure as the outbound HF signal 226. The antenna structure 16 transmits the outbound HF signal 226 in a transmit portion of the first frequency band (e.g., 824-849 MHz up-link (UL) and of WCDMA Band V).

The transmitter section 184 also converts the second outbound signal 234 into the third up converted signal 237 when the first one of the second multiple communication protocols (e.g., GSM 1800, GSM 1900, WCDMA BAND-III) is active and converts the second outbound signal 234 into the fourth up converted signal 236 when the second one of the second multiple communication protocols is active (e.g., WCDMA band II). When the first one of the second multiple of communication protocols is active, the transmitter section 184 provides the third up converted signal 237 as the second outbound HF signal 238 to the antenna structure 16 via the off-chip power amplifier (PA) 200. When the second one of the second multiple of communication protocols is active, the transmitter section 184 provides the fourth up converted signal 236 to the second multiple protocol off-chip duplexer 186 via a PA 198.

The duplexer 186 filters the fourth up converted signal 236 and provides the filtered up converted signal to the antenna structure 16 as the second outbound HF signal 238. The antenna structure 16 transmits the second outbound HF signal 238 in a transmit portion of the second frequency band (e.g., 1850-1910 MHz UL of GSM 1900 or of WCDMA Band II).

The transmitter section 184 also converts a third outbound signal 246 into a fifth up converted signal (not shown) when a first one of a third multiple communication protocols (e.g., WCDMA BAND-III) is active and converts the third outbound signal 246 into a sixth up converted signal 247 when the second one of the third multiple communication protocols is active (e.g., WCDMA band I). When the first one of the second multiple of communication protocols is active, the transmitter section 184 provides the fifth up converted signal as a third outbound HF signal 248 to the antenna structure 16 via an off-chip power amplifier (PA) (not shown). When the second one of the second multiple of communication protocols is active, the transmitter section 184 provides the sixth up converted signal 247 to the third multiple protocol off-chip duplexer 188 via a PA 202.

The duplexer 188 filters the sixth up converted signal 247 and provides the filtered up converted signal to the antenna structure 16 as the third outbound HF signal 248. The antenna structure 16 transmits the third outbound HF signal 248 in a transmit portion of the third frequency band (e.g., 1920-1980 MHz UL, 2110-2170 MHz DL of WCDMA BAND-III or of WCDMA Band I).

Figure 10 is a schematic block diagram of an embodiment of an integrated circuit (IC) 12,110, and/or 174 that includes a receiver section 18, 182, a transmitter section 20, 184, and a local oscillation generation module (LOGEN) 254. The receiver section 18, 182 includes a receiver module 250 and an inbound digital module 252. The transmitter section 20, 184 includes a transmitter module 256 and an outbound digital module 255.

The receiver module 250 is operable to convert an inbound high frequency (HF) signal 258 into a down converted inbound signal 262 based on a receive local oscillation 260 independently of a protocol of the inbound high frequency signal 258. For example, the inbound high frequency signal 258 may have a carrier frequency within a first set of frequency bands (e.g., 869-894 MHz) and is formatted in accordance with one of a first plurality of wireless communication protocols (e.g., GSM 800/850, EDGE, GPRS, WCDMA Band V) that utilize at least one of the first set of frequency bands. As such, regardless of the communication protocol, the receiver module 250 will convert the inbound HF signal 258, which may be one of the inbound HF signals discussed with reference to at least one of Figures 1-9, into a down converted inbound signal 262.

The inbound digital module 252 is coupled to compensate the down converted inbound signal 262 in accordance with a selected one of the first plurality of wireless communication protocols to produce a protocol specific inbound signal 264. For example, if the inbound HF signal 260 is formatted in accordance with GSM 800/850, the inbound digital module 252 will digitally process the down converted signal 262 in accordance with digital processing requirements of GSM 800/850 to produce the protocol specific inbound signal 264. The protocol specific digital processing performed by the inbound digital module 252 includes, but is not limited to, digital filtering in accordance with the first one of the first plurality of wireless communication protocols (e.g., GSM 800/850); digital filtering in accordance with the second one of the first plurality of wireless communication protocols (e.g., WCDMA Band V); digital de-rotation in accordance with the first one of the first plurality of wireless communication protocols; digital gain in accordance with the first one of the first plurality of wireless communication protocols; digital gain in accordance with the second one of the first plurality of wireless communication protocols; and/or other protocols in accordance with the first one or the second one of the first plurality of wireless communication protocols.

The outbound digital module 255 is coupled to convert a first digital outbound signal 266 into a first digitally processed outbound signal 267 when one of a first plurality of wireless communication protocols (e.g., GSM 800/850, WCDMA Band V, EDGE 800/850, GPRS 800/850) is active and to convert a second digital outbound signal 272 into a second digitally processed outbound signal 273 when one of a second (e.g., GSM 1900) or third (e.g., GSM 1800) plurality of wireless communication protocols is active. In an embodiment, the outbound digital module 255 may perform one or more of digital filtering, digital gain, digital calibration, digital offset adjust, and digital compensation.

The transmitter module 256 is operable to convert the first digitally processed outbound signal 267 into a first up converted signal 270 based on a transmit local oscillation 268 when a first one of the first plurality of wireless communication protocols is active. The first up converted signal 270, or outbound HF signal as described in one or more of Figures 1-9, may have a carrier frequency within the first set of frequency bands (e.g., 1800, 1900, 2100 MHz)

The transmitter module 256 is also operable convert the second digitally processed outbound signal 273 into a second up converted signal 274 based on the transmit local oscillation 274 when a second one of the first plurality of wireless communication protocols is active. The second up converted signal 274, or outbound HF signal as described in one or more of Figures 1-9, may have a carrier frequency within the first set of frequency bands (e.g., 1800, 1900, 2100 MHz).

The local oscillation module 254 is coupled to generate the receive local oscillation 260 and the transmit local oscillation 268 in accordance with the selected one of the first plurality of wireless communication protocols.

As an example, if the IC 12, 110, 174 supports GSM 800/850, EDGE, GPRS, and WCDMA Band V, the local oscillation generation module 254 generates a receive local oscillation 260 for the receive portion of the 800/850 MHz frequency band (e.g., 869-894 MHz DL) and generates a transmit local oscillation 268 for the transmit portion of the 800/850 MHz frequency band (e.g., 869-894 MHz DL). In this example, the receiver module 250 mixes the inbound HF signal 258 (which may be an inbound GSM signal or an inbound WCDMA signal) with the receive local oscillation 260 to subsequently produce the down converted signal 262.

Continuing with the example, the transmitter module 256 receives a GSM based (e.g., GSM 800/850, EDGE, GPRS) digital output signal as the first digital processed outbound signal 267 when the IC is in a GSM mode and receives a WCDMA based (e.g., WCDMA Band V, HSPA) digital output signal as the second digitally processed outbound signal 273 when the IC is in a WCDMA mode. In the GSM mode, the transmitter module 256 generates the 1^{st} outbound HF signal 270 from the GSM based digital signal and the transmit local oscillation 268 and when the IC is in the WCDMA mode, the transmitter module 256 generates the 2^{nd} outbound HF signal 274 from the WCDMA based digital signal and the transmit local oscillation 268.

As another example, if the IC 12, 110, 174 supports GSM 1900, EDGE, GPRS, and WCDMA Band II, the local oscillation generation module 254 generates a receive local oscillation 260 for the receive portion of the 1900 MHz frequency band (e.g., 1930-1990 MHz UL or DL) and generates a transmit local oscillation 268 for the transmit portion of the 1900 MHz frequency band (e.g., 1850-1910 MHz UL). In this example, the receiver module 250 mixes the inbound HF signal 258 (which may be an inbound GSM signal or an inbound WCDMA signal) with the receive local oscillation 260 to subsequently produce the down converted signal 262.

Continuing with the example, the transmitter module 256 receives a GSM based (e.g., GSM 1900, EDGE, GPRS) digital output signal as the first digital processed outbound signal 267 when the IC is in a GSM mode and receives a WCDMA based (e.g., WCDMA Band II, HSPA) digital output signal as the second digitally processed outbound signal 273 when the IC is in a WCDMA mode. In the GSM mode, the transmitter module 256 generates the 1^{st} outbound HF signal 270 from the GSM based digital signal and the transmit local oscillation 268 and when the IC is in the WCDMA mode, the transmitter module 256 generates the 2^{nd} outbound HF signal 274 from the WCDMA based digital signal and the transmit local oscillation 268.

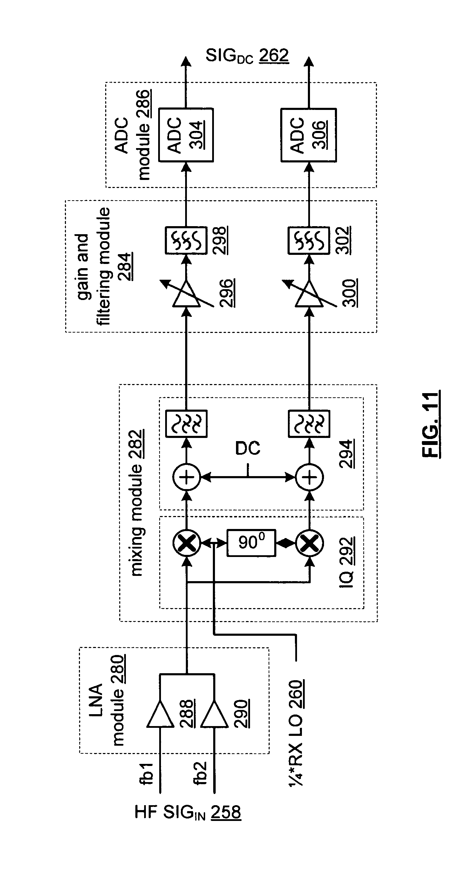

Figure 11 is a schematic block diagram of an embodiment of a receiver module 250 that includes a low noise amplifier module 280, a mixing module 282, an analog gain and digital filtering module 284, and an analog to digital converter module 286. The low noise amplifier (LNA) module 280 is coupled to amplify the inbound high frequency signal 258 to produce an amplified inbound high frequency signal. In an embodiment, the LNA module 280 includes a first LNA 288 and a second LNA 290. The first low noise amplifier 288 amplifies the inbound high frequency signal 258 to produce the amplified inbound high frequency signal when the inbound high frequency signal has the carrier frequency within a first frequency band of the first set of frequency bands (e.g., fb1 = one of 800 or 900 MHz). The second low noise amplifier 290 amplifies the inbound high frequency signal 258 to produce the amplified inbound high frequency signal when the inbound high frequency signal has the carrier frequency within a second frequency band of the first set of frequency bands (e.g., fb2 = the other of 800 or 900 MHz).

The mixing module 282 mixes the amplified inbound high frequency signal with the receive local oscillation 260 (e.g., 800 MHz or 900 MHz frequency band) to produce a low frequency mixed signal. In an embodiment, the mixing module 282 includes an in-phase/quadrature (I/Q) mixer 292 and a filtering stage 294. The I/Q mixer 292 mixes the amplified inbound high frequency signal with an I component of the receive local oscillation 260 and with a Q component of the receive local oscillation 260 to produce an IQ mixed signal. The filtering stage 294, which may include a DC adjust circuit and a low pass filter, filters the IQ mixed signal to produce the low frequency mixed signal.

The analog gain and filtering module 284, which may include an adjustable gain stage 296, 300 and a low pass filter 298, 302 for the I component and the Q component of the IQ mixed signal, performs at least one of filtering and gain adjusting of the low frequency mixed signal to produce an adjusted low frequency mixed signal. The analog to digital conversion module 286, which may include a pair of analog to digital converters 304, 306, converts the adjusted low frequency mixed signal into the down converted inbound signal 262.

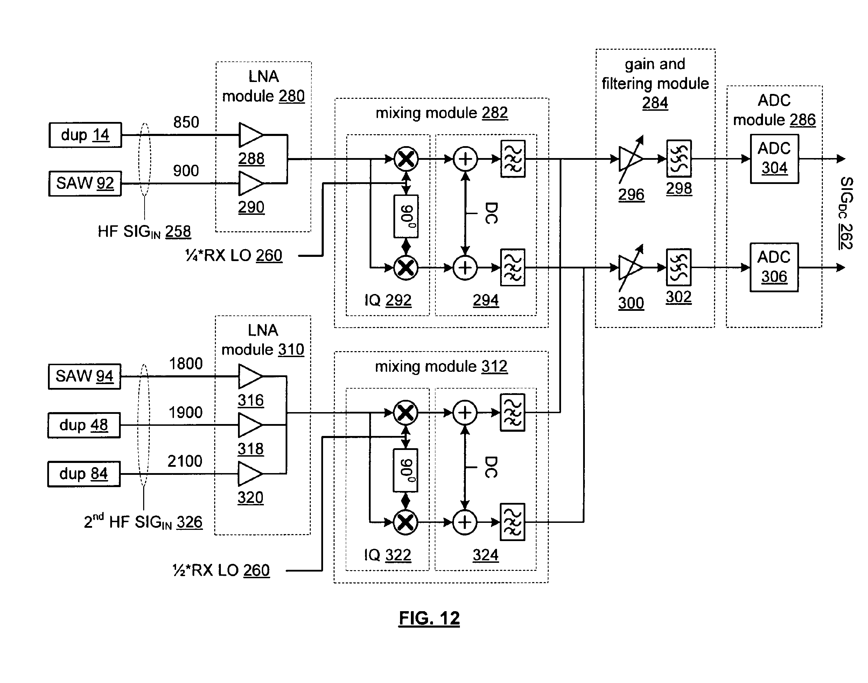

Figure 12 is a schematic block diagram of another embodiment of the receiver module 250 that includes the first low noise amplifier module 280, a second low noise amplifier module 310, the first mixing module 282, a second mixing module 312, the analog gain and digital filtering module 284, and the analog to digital converter module 286. The first LNA module 280 and the first mixing module 282 operate as previously discussed with reference to Figure 11.

The second low noise amplifier (LNA) module 310 is coupled to amplify the second inbound high frequency signal 326 to produce a second amplified inbound high frequency signal. The second inbound HF signal 326 may be formatted in accordance with any one of a second plurality of wireless communication protocols. For example, the first plurality of wireless communication protocols may include protocols that use an 800 MHz frequency band and/or a 900 MHz frequency band such as GSM 800/850, GSM 900,WCDMA Band V, EDGE at 800 or 900 MHz, GPRS at 800 or 900 MHz, and HSPA in Band V. The second plurality of wireless communication protocols may include protocols that use an 1800 MHz frequency band, a 1900 MHz frequency band, and/or a 2100 MHz frequency band such as GSM 1800, GSM 1900, WCDMA Band II, WCDMA Band I, HSPA at 1900 or 2100 MHz, GPRS at 1800 or 1900 MHz, and EDGE at 1800 or 1900 MHz.

In an embodiment, the second LNA module 310 includes a first LNA 316, a second LNA 318, and a third LNA 320. The first low noise amplifier 316 amplifies the second inbound high frequency signal 326 to produce the second amplified inbound high frequency signal when the second inbound high frequency signal has the carrier frequency within a first frequency band of the second set of frequency bands (e.g., 1800 of 1800, 1900, and 2100 MHz). The second low noise amplifier 318 amplifies the second inbound high frequency signal 326 to produce the second amplified inbound high frequency signal when the inbound high frequency signal has the carrier frequency within a second frequency band of the second set of frequency bands (e.g., 1900 of 1800, 1900, and 2100 MHz). The third low noise amplifier 320 amplifies the second inbound high frequency signal 326 to produce the second amplified inbound high frequency signal when the inbound high frequency signal has the carrier frequency within a second frequency band of the second set of frequency bands (e.g., 2100 of 1800, 1900, and 2100 MHz).

The second mixing module 312 mixes the second amplified inbound high frequency signal with the receive local oscillation 260 (e.g., corresponding to the 1800, 1900, or 2100 MHz frequency band) to produce a second low frequency mixed signal. In an embodiment, the second mixing module 312 includes an in-phase/quadrature (I/Q) mixer 322 and a filtering stage 324. The I/Q mixer 322 mixes the second amplified inbound high frequency signal with an I component of the receive local oscillation 260 and with a Q component of the receive local oscillation 260 to produce a second IQ mixed signal. The filtering stage 324, which may include a DC adjust circuit and/or a low pass filter, filters the second IQ mixed signal to produce a second low frequency mixed signal.

The analog gain and filtering module 284, which may include an adjustable gain stage 296, 300 and a low pass filter 298, 302 for the I component and the Q component of the IQ mixed signal, performs at least one of filtering and gain adjusting of the low frequency mixed signal or the second low frequency mixed signal to produce an adjusted low frequency mixed signal. The analog to digital conversion module 286, which may include a pair of analog to digital converters 304, 306, converts the adjusted low frequency mixed signal into the down converted inbound signal 262.

As an example, let the first inbound HF signal 258 be expressed as A₁(t)*cos(ω_{HF1}(t) + ω_{D1}(t) + θ₁(t)) and let the second inbound HF signal 326 be expressed as A₂(t)*cos(ω_{HF2}(t) + ω_{D2}(t) + θ₂(t)), where A₁(t) represents amplitude information of the first inbound HF signal 258, ω_{HF1}(t) represents the carrier frequency of the first inbound HF signal 258, ω_{D1}(t) represents the data frequency of the first inbound HF signal 258, and θ₁(t) represents phase information of the first inbound HF signal 258; and where A₂(t) represents amplitude information of the second inbound HF signal 326, ω_{HF2}(t) represents the carrier frequency of the second inbound HF signal 326, ω_{D2}(t) represents the data frequency of the second inbound HF signal 326, and θ₂(t) represents phase information of the second inbound HF signal 326. Further, let the receive local oscillation 260 be expressed as cos(ω_{RX}(t)), where ω_{RX}(t) represents the frequency of the local oscillation 260.

When the first inbound HF signal 258 is being received, the local oscillation 260 is adjusted such that ω_{RX}(t) substantially equals ω_{HF1}(t). In this instance, the first mixing module 282 mixes the first inbound HF signal 258 [e.g., A₁(t)*cos(ω_{HF1}(t) + ω_{D1}(t) + θ₁(t))] with ¼ times the local oscillation [e.g., cos(ω_{RX}(t))] 260 to produce the down converted mixed signal, which, for the I path, may be expressed as A₁(t)*cos(ω_{D1}(t) + θ₁(t)).

When the second inbound HF signal 326 is being received, the local oscillation 260 is adjusted such that ω_{RX}(t) substantially equals ω_{HF2}(t). In this instance, the second mixing module 3121 mixes the second inbound HF signal 326 [e.g., A₂(t)*cos(ω_{HF2}(t) + ω_{D2}(t) + θ₂(t))] with ½ times the local oscillation [e.g., cos(ω_{Rx}(t))] 260 to produce the down converted mixed signal, which, for the I path, may be expressed as A₂(t)*cos(ω_{D2}(t) + θ₂(t)).

As can be deduced from this example, once the first or second inbound HF signal has been mixed via the mixing modules 282 or 312, the resulting signals are of a similar format and have retained the particular amplitude information, phase information, and data frequency of the particular protocol regardless of the carrier frequency. As such, the receiver module 250 is protocol independent and frequency band dependent (at least to a set of frequency bands).

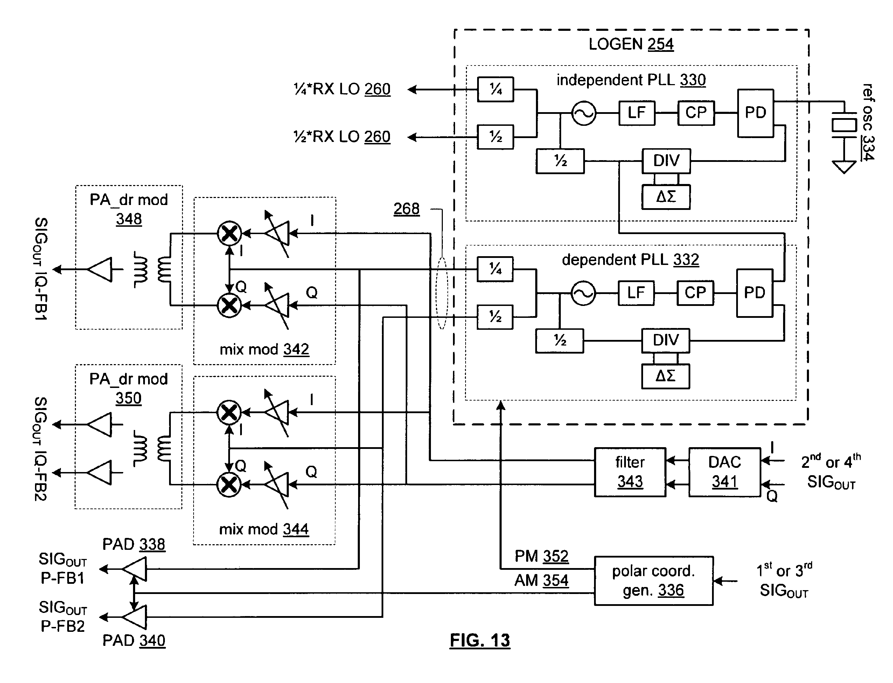

Figure 13 is a schematic block diagram of an embodiment of the local oscillation generation module 254 and the transmitter module 256. The local oscillation generation module 254 includes an independent phase locked loop (PLL) 330 and a dependent PLL 332. The transmitter module 256 includes a polar coordinate generation module 336, a plurality of power amplifier driver modules 338, 340, 348, 350, a first mixing module 342, and a second mixing module 344.

The independent PLL 330 may include a phase detector (PD), a charge pump (CP), a loop filter (LF), a voltage controlled oscillator, a divider module (DIV), a delta-sigma modulator (ΔΣ), a pair of ½ frequency dividers, and a ¼ frequency divider. The independent PLL 330 generates the receive local oscillation 260 based on a reference oscillation 334. For example, for lower frequency band protocols (e.g., GSM 800/850, WCDMA Band V), the receiver local oscillation 260 is provided via the ¼ frequency divider and, for high frequency band protocols (e.g., GSM 1800, GSM 1900, WCDMA Band I, WCDMA Band II), the receive local oscillation 260 is provided via one of the ½ frequency dividers.

The dependent PLL 332 may include a phase detector (PD), a charge pump (CP), a loop filter (LF), a voltage controlled oscillator, a divider module (DIV), a delta-sigma modulator (ΔΣ), a pair of ½ frequency dividers, and a ¼ frequency divider. The dependent PLL 332 generates the transmit local oscillation 268 based on a feedback oscillation of the independent PLL 330. For example, for lower frequency band protocols (e.g., GSM 800/850, WCDMA Band V), the transmitter local oscillation 268 is provided via the ¼ frequency divider and, for high frequency band protocols (e.g., GSM 1800, GSM 1900, WCDMA Band I, WCDMA Band II), the transmitter local oscillation 268 is provided via one of the ½ frequency dividers.

When the IC is a low band first mode (e.g., GSM 800/850, GSM 900), the polar coordinate generation module 336 converts the first outbound signal 266 into phase modulation information 352 and/or amplitude modulation information 354. The polar coordinate generation module 336 provides the phase modulation information 352 to the dependent PLL 332 and the amplitude modulation information 354 to the first power amplifier driver module 338.

The dependent PLL 332 modulates the transmit local oscillation 268 based on the phase modulation information 352 to produce a transmit local oscillation having phase modulation. The phase modulation information 352 may be injected into the divider module (DIV), the delta-sigma module, and/or the voltage controlled oscillator. As an example of generating the transmit local oscillation having phase modulation, let the phase modulation information 352 be expressed as θ_{LB1}(t), where LB1 represents the low band first mode, and let the transmit local oscillation 268 be cos(ω_{HF1}(t)), where HF1 represents the desired carrier frequency of the first outbound HF signal. From this, the transmit local oscillation having phase modulation may be expressed as cos(ω_{HF1}(t) + θ_{LB1}(t)).

The first power amplifier driver module 338, which may include one or more power amplifier drivers coupled in series and/or in parallel and further includes an on-chip transformer balun, amplifies the transmit local oscillation having the phase modulation based on the amplitude modulation information 354 (e.g., A_{LB1}(t)) to produce the first outbound HF signal. Continuing with the example, the first outbound HF signal may be expressed as A_{LB1}(t)* cos(ω_{HF1}(t) + θ_{LB1}(t)) (e.g., SIG_{OUT} P FB1).

When the IC is a high band first mode (e.g., GSM 1800, GSM 1900), the polar coordinate generation module 336 converts a third outbound signal into phase modulation information 352 and/or amplitude modulation information 354. The polar coordinate generation module 336 provides the phase modulation information 352 to the dependent PLL 332 and the amplitude modulation information 354 to the second power amplifier driver module 340.

The dependent PLL 332 modulates the transmit local oscillation 268 based on the phase modulation information 352 to produce a transmit local oscillation having phase modulation. For example, let the phase modulation information 352 be expressed as θ_{HB1}(t), where HB1 represents the high band first mode, and let the transmit local oscillation 268 be cos(ω_{HF2}(t)), where HF2 represents the desired carrier frequency of the second outbound HF signal (e.g., in the 1800 MHz or 1900 MHz frequency band). From this, the transmit local oscillation having phase modulation may be expressed as cos(ω_{HF2}(t) + θ_{HB1}(t)).

The second power amplifier driver module 340, which may include one or more power amplifier drivers coupled in series and/or in parallel and further includes an on-chip transformer balun, amplifies the transmit local oscillation having the phase modulation based on the amplitude modulation information 354 (e.g., A_{HB1}(t)) to produce the third outbound HF signal, which may be expressed as A_{HB1}(t)* cos(ω_{HF2}(t) + θ_{HB1}(t)) (e.g., SIG_{OUT} P FB2).

When the IC is in a low band second mode (e.g., WCDMA Band V, Band VI, Band VII), the polar coordinate generation module 336 is inactive or generates null phase modulation information and null amplitude modulation information. In this instance, the second outbound signal is converted to an analog signal and filtered to produce a filtered analog outbound signal, which may be expressed as A_{1_2}(t)cos(ω_{D1_2}(t) + θ_{1_2}(t)), which includes an I component, which may be expressed as A_{I1_2}(t)cos(ω_{D1_2}(t) + θ_{1_2}(t)), and a Q component, which may be expressed as A_{Q1_2}(t)sin(ω_{D1_2}(t) + θ_{1_2}(t)), where A_{1_2} = √A_{I1_2}² + A_{Q1_2}²., where Ai1=Aq1=A.

The first mixing module 342 mixes the I and Q components of the filtered analog outbound signal with I and Q components the transmit local oscillation in a low band mode to produce a mixed signal. For example, the I component of the transmit local oscillation in the low band mode may be expressed as cos(ω_{LB1}(t)) and the Q component may be expressed as sin(ω_{LB1}(t)), where LB 1 corresponds to the desired frequency of the second outbound HF signal (e.g., 800 MHz, 850 MHz, or 900MHz frequency band). In this instance, the mixed signal may be expressed as A_{1_2}(t)cos(ω_{LB1}(t) + ω_{D1_2}(t) + θ_{1_2}(t)). The third power amplifier driver module 344, which may include one or more power amplifier drivers coupled in series and/or in parallel and further includes an on-chip transformer balun, amplifies the mixed signal (i.e., the second up converted signal) to produce the second outbound HF signal (e.g., SIG_{OUT}IQ F_B1).

When the IC is in a high band second mode (e.g., WCDMA Band I, Band II), the polar coordinate generation module 336 is inactive or generates null phase modulation information and null amplitude modulation information. In this instance, the fourth outbound signal is converted to an analog signal and filtered to produce a second filtered analog outbound signal, which may be expressed as A_{2_2}(t)cos(ω_{D2_2}(t) + θ_{2_2}(t)), which includes an I component, which may be expressed as A_{I2_2}(t)cos(ω_{D2_2}(t) + θ_{2_2}(t)), and a Q component, which may be expressed as A_{Q2_2}(t)sin(ω_{D2_2}(t) + θ_{2_2}(t)), where A_{2_2} = √A_{I2_2}² + A_{Q2-2}².

The second mixing module 346 mixes the I and Q components of the second filtered analog outbound signal with I and Q components the transmit local oscillation in a high band mode to produce a second mixed signal. For example, the I component of the transmit local oscillation in the high band mode may be expressed as cos(ω_{HB2}(t)) and the Q component may be expressed as sin(ω_{HB2}(t)), where HB2 corresponds to the desired frequency of the fourth outbound HF signal (e.g., 1800 MHz, 1900 MHz, or 2100 MHz frequency band). In this instance, the second mixed signal may be expressed as A_{2_2}(t)cos(ω_{HB2}(t) + ω_{D2_2}(t) + θ_{2_2}(t)). The fourth power amplifier driver module 350, which may include one or more power amplifier drivers coupled in series and/or in parallel and further includes an on-chip transformer balun, amplifies the second mixed signal (i.e., the fourth up converted signal) to produce the fourth outbound HF signal (e.g., SIG_{OUT} IQ FB2).

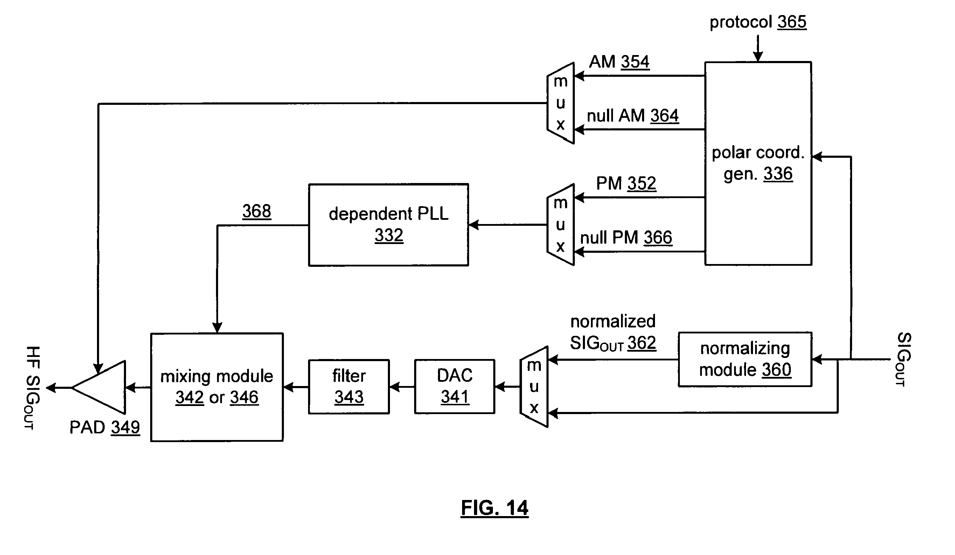

Figure 14 is a schematic block diagram of another embodiment of a transmitter module 256 that includes the polar coordinate generation module 336, the dependent PLL 332, a normalizing module 360, the first and/or second mixing module 342 and/or 346, the first and/or second power amplifier driver module 349, and a plurality of multiplexers (MUX). The dependent PLL 332 generates the transmit local oscillation 368 in accordance with a first set of frequency bands (e.g., 800 MHz, 850 MHz, 900 MHz) and/or a second set of frequency bands (e.g., 1800 MHz, 1900 MHz, 2100 MHz) based on an oscillation derived from the independent PLL 330.

When the IC is in a low band first mode (e.g., GSM 800/850, GSM 900), the polar coordinate generation module 336 converts the first outbound signal into phase modulation information 352 and amplitude modulation information 354. The polar coordinate generation module 336 provides the phase modulation information to the dependent PLL 332 or to the normalizing module 360 and provides the amplitude modulation information to the first power amplifier driver module 349.

The normalizing module 360 normalizes the first outbound signal to produce a first normalized outbound signal 362. For example, if the first outbound signal is represented as A_{1_2}(t)cos(ω_{D1_2}(t) + θ_{1_2}(t)), which includes an I component, which may be expressed as A_{I1_2}(t)cos(ω_{D1_2}(t) + θ_{1_2}(t)), and a Q component, which may be expressed as A_{Q1_2}(t)sin(ω_{D1_2}(t) + θ_{1_2}(t)), where A_{1_2} = √A_{I1_2}² + A_{Q1-2}², then the normalized outbound signal may be expressed as cos(ω_{D1_2}(t) + θ_{1_2}(t)), which includes an I component, which may be expressed as cos(ω_{D1_2}(t) + θ_{1_2}(t)), and a Q component, which may be expressed as sin(ω_{D1_2}(t) + θ_{1_2}(t)).

The first mixing module 342 mixes the normalized I and Q components of the filtered analog outbound signal with I and Q components the transmit local oscillation in a low band mode to produce a normalized mixed signal. For example, the I component of the transmit local oscillation in the low band mode may be expressed as cos(ω_{LB1}(t)) and the Q component may be expressed as sin(ω_{LB1}(t)), where LB1 corresponds to the desired frequency of the second outbound HF signal (e.g., 800 MHz, 850 MHz, or 900MHz frequency band). In this instance, the normalized mixed signal may be expressed as cos(ω_{LB1}(t) + ω_{D1_2}(t) + θ_{1_2}(t)).

The power amplifier driver module 349 amplifies the normalized mixed signal based on the amplitude modulation information 354 (e.g., A_{LB1}(t)) to produce the first outbound HF signal 270, which may be expressed as A_{LB1}(t)* cos(ω_{F1}(t) + ω_{D1_2}(t) + θ_{LB1}(t)).

When the IC is in a high band first mode (e.g., GSM 1800, GSM 1900), the polar coordinate generation module 336 converts the third outbound signal into phase modulation information 352 and amplitude modulation information 354. The polar coordinate generation module 336 provides the phase modulation information to the dependent PLL 332 or to the normalizing module 360 and provides the amplitude modulation information to the first power amplifier driver module 349.

The normalizing module 360 normalizes the second outbound signal to produce a second normalized outbound signal 362. For example, if the second outbound signal is represented as A_{2_2}(t)cos(ω_{D2_2}(t) + θ_{2_2}(t)), which includes an I component, which may be expressed as A_{I2_2}(t)cos(ω_{D2_2}(t) + θ_{2_2}(t)), and a Q component, which may be expressed as A_{Q2_2}(t)sin(ω_{D2_2}(t) + θ_{2_2}(t)), where A_{1_2} = √A_{I1_2}² + AQ_{1_2}², then the normalized outbound signal may be expressed as cos(ω_{D2_2}(t) + θ_{2_2}(t)), which includes an I component, which may be expressed as cos(ω_{D2_2}(t) + θ_{2_2}(t)), and a Q component, which may be expressed as sin(ω_{D2_2}(t) + θ_{2_2}(t)).

The second mixing module 346 mixes the second normalized I and Q components of the filtered analog outbound signal with I and Q components the transmit local oscillation in a high band mode to produce a second normalized mixed signal. For example, the I component of the transmit local oscillation in the high band mode may be expressed as cos(ω_{HB1}(t)) and the Q component may be expressed as sin(ω_{HB1}(t)), where HB 1 corresponds to the desired frequency of the fourth outbound HF signal (e.g., 1800 MHz, 1900 MHz, or 2100 MHz frequency band). In this instance, the second normalized mixed signal may be expressed as cos(ω_{HB1}(t) + ω_{D2_2}(t) + θ_{2_2}(t)).

The power amplifier driver module 349 amplifies the second normalized mixed signal based on the amplitude modulation information 354 (e.g., A_{HB1}(t)) to produce the third outbound HF signal, which may be expressed as A_{HB1}(t)* cos(ω_{HF2}(t) + ω_{D2_2}(t) + θ_{2_2}(t)).

When the IC is in a low band second mode (e.g., WCDMA Band V, Band VI, Band VII), the polar coordinate generation module 336 generates null phase modulation information 366 and null amplitude modulation information 364. The null phase modulation information 366 is provided to the dependent PLL 332, which generates the transmit local oscillation having a low band frequency without phase modulation. In addition, the null amplitude information 364 is provided to the power amplifier driver module 349.

In this instance, the second outbound signal is converted to an analog signal and filtered to produce a filtered analog outbound signal, which may be expressed as A_{1_2}(t)cos(ω_{D1_2}(t) + θ_{1_2}(t)), which includes an I component, which may be expressed as A_{I1_2}(t)cos(ω_{D1_2}(t) + θ_{1_2}(t)), and a Q component, which may be expressed as A_{Q1_2}(t)sin(ω_{D1_2}(t) + θ_{1_2}(t)), where A_{1_2} = √AI_{1_2}² + A_{Q1_2}².

The first mixing module 342 mixes the I and Q components of the filtered analog outbound signal with I and Q components the transmit local oscillation in a low band mode to produce a mixed signal. For example, the I component of the transmit local oscillation in the low band mode may be expressed as cos(ω_{LB1}(t)) and the Q component may be expressed as sin(ω_{LB1}(t)), where LB1 corresponds to the desired frequency of the second outbound HF signal (e.g., 800 MHz, 850 MHz, or 900MHz frequency band). In this instance, the mixed signal may be expressed as A_{1_2}(t)cos(ω_{LB1}(t) + ω_{D1_2}(t) + θ_{1_2}(t)). The power amplifier driver module 349 amplifies the mixed signal (i.e., the second up converted signal) to produce the second outbound HF signal 274.

When the IC is in a high band second mode (e.g., WCDMA Band I, Band II), the polar coordinate generation module 336 generates the null phase modulation information 366 and the null amplitude modulation information 364. In this instance, the fourth outbound signal is converted to an analog signal and filtered to produce a second filtered analog outbound signal, which may be expressed as A_{2_2}(t)cos(ω_{D2_2}(t) + θ_{2_2}(t)), which includes an I component, which may be expressed as A_{I2_2}(t)cos(ω_{D2_2}(t) + θ_{2_2}(t)), and a Q component, which may be expressed as A_{Q2_2}(t)sin(ω_{D2_2}(t) + θ_{2_2}(t)), where A_{2_2} = √A_{I2_2}² + A_{Q2_2}².

The second mixing module 346 mixes the I and Q components of the second filtered analog outbound signal with I and Q components the transmit local oscillation in a high band mode to produce a second mixed signal. For example, the I component of the transmit local oscillation in the high band mode may be expressed as cos(ω_{HB2}(t)) and the Q component may be expressed as sin(ω_{HB2}(t)), where HB2 corresponds to the desired frequency of the fourth outbound HF signal (e.g., 1800 MHz, 1900 MHz, or 2100 MHz frequency band). In this instance, the second mixed signal may be expressed as A_{2_2}(t)cos(ω_{HB2}(t) + ω_{D2_2}(t) + θ_{2_2}(t)). The power amplifier driver module 349, which may include one or more power amplifier drivers coupled in series and/or in parallel and further includes an on-chip transformer balun, amplifies the second mixed signal (i.e., the fourth up converted signal) to produce the fourth outbound HF signal.

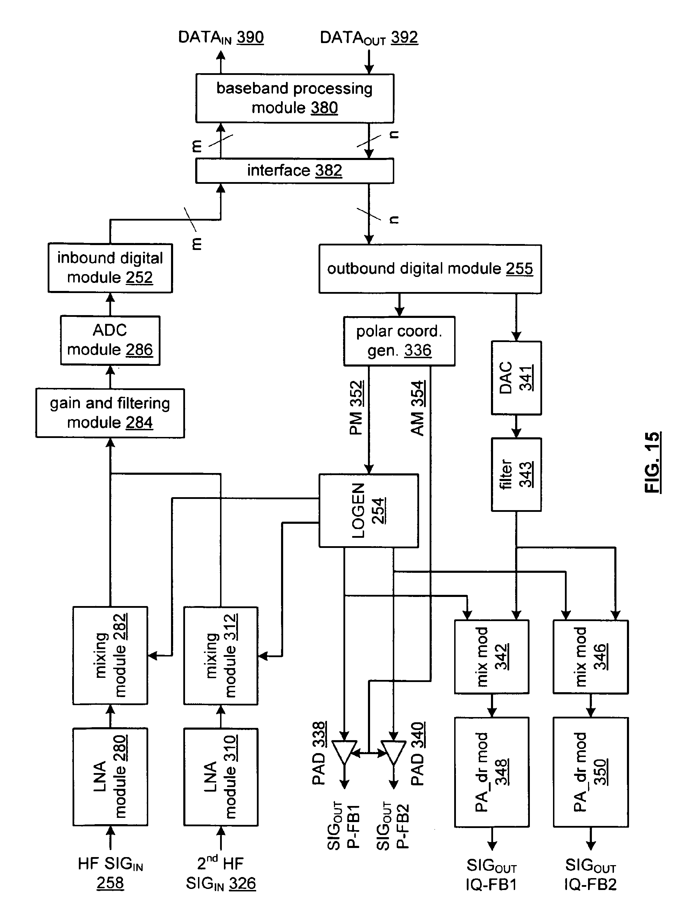

Figure 15 is a schematic block diagram of another embodiment of an integrated circuit (IC) 12, 110, 174 that includes a baseband processing module 380, an HF to baseband interface 382, the inbound digital module 252, the ADC module 286, the analog gain and filtering module 284, the first mixing module 282, the second mixing module 312, the first LNA module 280, the second LNA module 310, a plurality of power amplifier driver modules 338, 340, 348, 350, a first TX mixing module 342, a second TX mixing module 346, a polar coordinate generation module 336, a filter module 343, a DAC module 341, an outbound digital module 255, and a local oscillation generation module 254. The inbound digital module 252, the ADC module 286, the analog gain and filtering module 284, the first mixing module 282, the second mixing module 312, the first LNA module 280, the second LNA module 310, a plurality of power amplifier driver modules 338, 340, 348, 350, a first TX mixing module 342, a second TX mixing module 346, a polar coordinate generation module 336, a filter module 343, a DAC module 341, an outbound digital module 255, and a local oscillation generation module 254 operate as previously discussed in at least one of Figures 1-14.

The baseband processing module 380 may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module 380 may have an associated memory and/or memory element, which may be a single memory device, a plurality of memory devices, and/or embedded circuitry of the processing module 380. Such a memory device may be a read-only memory, random access memory, volatile memory, non-volatile memory, static memory, dynamic memory, flash memory, cache memory, and/or any device that stores digital information. Note that when the processing module 380 implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Further note that, the memory element stores, and the processing module 380 executes, hard coded and/or operational instructions corresponding to at least some of the steps and/or functions illustrated in Figures 1-17.

The baseband processing module 380 converts outbound data 392 into at least one of the first - fourth outbound signals in accordance with one or more existing wireless communication standards, new wireless communication standards, modifications thereof, and/or extensions thereof (e.g., GSM, AMPS, digital AMPS, CDMA, etc.). The baseband processing module 380 may perform one or more of scrambling, encoding, constellation mapping, modulation, frequency spreading, frequency hopping, beamforming, space-time-block encoding, space-frequency-block encoding, and/or digital baseband to IF conversion to convert the outbound data 392 into the first - fourth outbound signal. Depending on the desired formatting of the outbound signal, the baseband processing module 380 may generate the outbound signal as Cartesian coordinates (e.g., having an in-phase signal component and a quadrature signal component to represent a symbol), as Polar coordinates (e.g., having a phase component and an amplitude component to represent a symbol), or as hybrid coordinates as disclosed in co-pending patent application entitled HYBRID RADIO FREQUENCY TRANSMITTER, having a filing date of 3/24/06, and an application number of 11/388,822, and co-pending patent application entitled PROGRAMMABLE HYBRID TRANSMITTER, having a filing date of 7/26/06, and an application number of 11/494,682.

In addition, the baseband processing module 380 converts the inbound signal into inbound data 390. The baseband processing module 380 may perform one or more of descrambling, decoding, constellation demapping, modulation, frequency spreading decoding, frequency hopping decoding, beamforming decoding, space-time-block decoding, space-frequency-block decoding, and/or IF to digital baseband conversion to convert the inbound signal from the inbound digital module 252 into the inbound data 390.

The interface 382 conveys the outbound signal to the outbound digital module 255 and conveys the inbound signal from the inbound digital module 252 to the baseband processing module 380. The interface 382 may be implemented as disclosed in co-pending patent application entitled VOICE-DATA-RF IC, having a filing date of 12/19/06, and a serial number of 11/641,999.

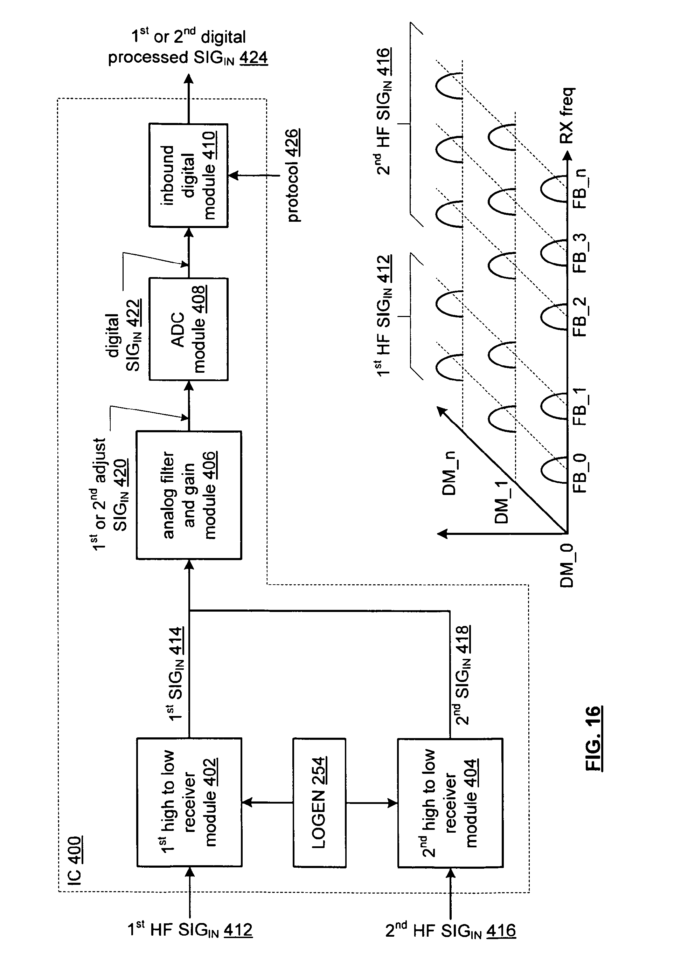

Figure 16 is a schematic block diagram of another embodiment of an integrated circuit (IC) 400 that includes a first high frequency to low frequency receiver module 402, a second high frequency to low frequency receiver module 404, a local oscillation generator 254, an analog low frequency filter and gain module 406, an analog to digital converter (ADC) module 408, and an inbound digital module 410. In an embodiment, the IC 400 may be used in communication device 10 to receive one or more inbound high frequency (HF) signals formatted in accordance with a plurality of communication protocols.

The first high frequency to low frequency receiver module 402 is coupled to convert a first inbound high frequency signal 412 into a first inbound signal 414 independently of a first plurality of wireless communication protocols (e.g., GSM 800/850, GSM 900, EGDE at 900 MHz, GPRS at 900 MHz, WCDMA Band V, WCDMA Band VI, WCDMA Band VIII, HSPA at 900 MHz). The first inbound high frequency signal 412 is formatted in accordance with one of the first plurality of wireless communication protocols and has a carrier frequency within a first set of frequency bands (e.g., 800 MHz, 850 MHz, 900 MHz).

In an embodiment, the first high frequency to low frequency receiver module 402 includes a low noise amplifier module and a mixing module. The low noise amplifier module is coupled to amplify the first inbound high frequency signal 412 to produce a first amplified inbound high frequency signal. The mixing module is coupled to mix the first amplified inbound high frequency signal with the low band receive local oscillation to produce the first inbound signal 414.

The low noise amplifier module of the preceding embodiment may include first and second low noise amplifiers. The first low noise amplifier is coupled to amplify the first inbound high frequency signal 412 to produce the first amplified inbound high frequency signal when the first inbound high frequency signal has the carrier frequency within a first frequency band (e.g., 850 MHz) of the first set of frequency bands. The second low noise amplifier is coupled to amplify the first inbound high frequency signal 412 to produce the first amplified inbound high frequency signal when the first inbound high frequency signal has the carrier frequency within a second frequency band (e.g., 900 MHz) of the first set of frequency bands.

The mixing module of the preceding embodiment may include an in-phase/quadrature (I/Q) mixer and a filtering stage. The IQ mixer is coupled to mix the first amplified inbound high frequency signal with an I component of the low band receive local oscillation and to mix the first amplified high frequency signal with a Q component of the low band receive local oscillation to produce an IQ mixed signal. The filtering stage is coupled to filter the IQ mixed signal to produce the first inbound signal.

The second high frequency to low frequency receiver module 404 is coupled to convert a second inbound high frequency signal 416 into a second inbound signal 418 independently of a second plurality of wireless communication protocols (e.g., GSM 1800, GSM 1900, EGDE at 1800 or 1900 MHz, GPRS at 1800 or 1900 MHz, WCDMA Band I, WCDMA Band II, WCDMA Band III, HSPA at 1900 or 2100 MHz). The second inbound high frequency signal 416 is formatted in accordance with one of the second plurality of wireless communication protocols and has a carrier frequency within a second set of frequency bands (e.g., 1800, 1900, 2100 MHz).

In an embodiment, the second high frequency to low frequency receiver module 404 may include a low noise amplifier module and a mixing module. The low noise amplifier module is coupled to amplify the second inbound high frequency signal to produce a second amplified inbound high frequency signal. The mixing module is coupled to mix the second amplified inbound high frequency signal with the high band receive local oscillation to produce the second inbound signal 418.

The low noise amplifier module of the preceding embodiment may include first and second low noise amplifiers. The first low noise amplifier is coupled to amplify the second inbound high frequency signal 416 to produce the second amplified inbound high frequency signal when the second inbound high frequency signal has the carrier frequency within a first frequency band (e.g., 1900 MHz) of the second set of frequency bands. The second low noise amplifier is coupled to amplify the second inbound high frequency signal 416 to produce the second amplified inbound high frequency signal when the second inbound high frequency signal has the carrier frequency within a second frequency band (e.g., 2100 MHz) of the second set of frequency band.

The mixing module of the preceding embodiment may include an in-phase/quadrature (I/Q) mixer and a filtering stage. The IQ mixer is coupled to mix the second amplified inbound high frequency signal with an I component of the high band receive local oscillation and to mix the second amplified high frequency signal with a Q component of the high band receive local oscillation to produce an IQ mixed signal. The filtering stage is coupled to filter the IQ mixed signal to produce the second inbound signal.

The local oscillation module 254 generates the low band receive local oscillation in accordance with the one of the first plurality of wireless communication protocols. The local oscillation module 254 also generates the high band receive local oscillation in accordance with the one of the second plurality of wireless communication protocols.

The analog low frequency filter and gain module 406 is coupled to filter and adjust gain of the first or second inbound signal 414 or 416 to produce a filtered and gain adjusted inbound signal 420. The analog to digital conversion module 408 is coupled to convert the filtered and gain adjusted inbound signal 420 into a digital inbound signal 422.

The inbound digital module 410 is coupled to convert the digital inbound signal 422 into a first digitally processed inbound signal 424 when the one of the first plurality of wireless communication protocols is active and to convert the digital inbound signal 422 into a second digitally processed inbound signal 424 when the one of the second plurality of wireless communication protocols is active. In an embodiment, the inbound digital module may perform one or more of: digital filtering in accordance with the one of the first or the second plurality of wireless communication protocols; digital filtering in accordance with a second one of the first or the second plurality of wireless communication protocols; digital de-rotation in accordance with the one or the second one of the first or the second plurality of wireless communication protocols; digital gain in accordance with the one of the first or the second plurality of wireless communication protocols; digital gain in accordance with the second one of the first or the second plurality of wireless communication protocols; and CMF in accordance with the one or the second one of the first or the second plurality of wireless communication protocols.

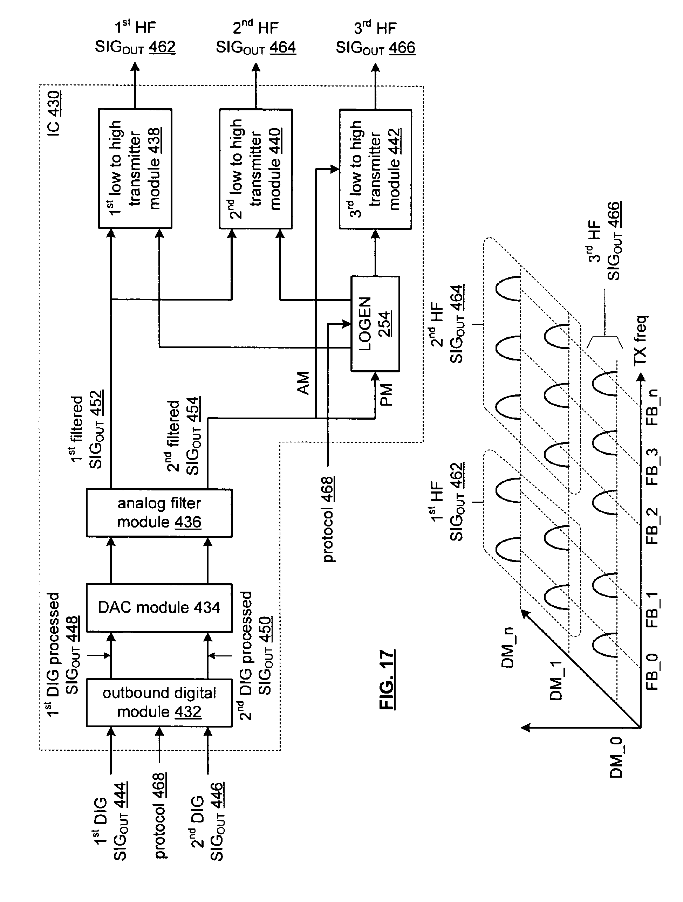

Figure 17 is a schematic block diagram of another embodiment of an integrated circuit (IC) 430 that includes an outbound digital module 432, a digital to analog conversion (DAC) module 434, an analog filter module 436, the local oscillation generation module 254, and a plurality of low frequency to high frequency conversion modules 438-442. In an embodiment, the IC 430 may be used in communication device 10 to transmit one or more outbound high frequency (HF) signals formatted in accordance with a plurality of communication protocols. Note that the IC 430 may include more or less low to high transmitter modules than the three illustrated.

The outbound digital module 432 is coupled to convert a first digital outbound signal 444 into a first digitally processed outbound signal 448 when one of a first (e.g., WCDMA Band V, Band VI, Band VIII, HSPA at 900 MHz) or a second (e.g., WCDMA Band I, Band II, HSPA at 1800, 1900, or 2100 MHz) plurality of wireless communication protocols is active and to convert a second digital outbound signal 446 into a second digitally processed outbound signal 450 when one of a third plurality of wireless communication protocols (e.g., GSM 800/850, GSM 900, GSM 1800, GSM 1900, or EDGE at 850, 900, 1800, or 1900 MHz) is active.

The digital to analog conversion module 434 is coupled to convert the first digitally processed outbound signal 448 into a first analog outbound signal and to convert the second digitally processed outbound signal 450 into a second analog outbound signal. The analog filter module 436 is coupled to filter the first analog outbound signal to produce a first filtered outbound signal 452 and to filter the second analog outbound signal to produce a second filtered outbound signal 454.

The first low frequency to high frequency transmitter module 438 is coupled to convert the first filtered outbound signal 452 into a first outbound high frequency signal 462 in accordance with the one of the first plurality of wireless communication protocols (e.g., WCDMA Band V, Band VI, Band VIII, HSPA at 900 MHz). In an embodiment, the first low to high frequency transmit module 438 includes a mixing module and a power amplifier drive module. The mixing module is coupled to mix the first filtered outbound signal 432 with the low band transmit local oscillation (e.g., within 800, 850, or 900 MHz frequency band) to produce a first mixed signal. The power amplifier driver module is coupled to amplify the first mixed signal to produce the first outbound high frequency signal 462.

The second low frequency to high frequency transmitter module 440 is coupled to convert the first filtered outbound signal 452 into a second outbound high frequency signal 464 in accordance with the one of the second plurality of wireless communication protocols (e.g., WCDMA Band I, Band II, Band III, HSPA at 1800, 1900, or 2100 MHz). In an embodiment, the second low frequency to high frequency transmitter module includes a mixing module and a power amplifier driver module. The mixing module is coupled to mix the first filtered outbound signal 452 with the high band transmit local oscillation (e.g., within the 1800, 1900, or 2100 MHz frequency band) to produce a second mixed signal. The power amplifier driver module is coupled to amplify the second mixed signal to produce the second outbound high frequency signal 464.

The third low frequency to high frequency transmitter module 442 is coupled to convert the second filtered outbound signal 454 into a third outbound high frequency signal 466 in accordance with the one of the third plurality of wireless communication protocols (e.g., GSM 800/850, GSM 900, GSM 1800, GSM 1900, EDGE and/or GPRS at 850, 900, 1800, or 1900 MHz). In an embodiment, the third low frequency to high frequency transmitter module 442 includes a polar coordinate generation module and a first power amplifier driver module. The polar coordinate generation module is coupled to convert the second filtered outbound signal into first phase modulation information and first amplitude modulation information when a first one (e.g., in a low band of 800, 850, or 900 MHz) of the third plurality of wireless communication protocols is active. The polar coordinate generation module provides the first phase modulation information to the local oscillation module 254 such that the local oscillation module produces the low band transmit local oscillation having phase modulation. The first power amplifier driver module is coupled to amplify the low band transmit local oscillation having phase modulation in accordance with the first amplitude modulation to produce the third outbound high frequency signal 466.

In another embodiment, the third low frequency to high frequency transmitter module 442 includes a polar coordinate generation module and a first power amplifier driver module. The polar coordinate generation module is coupled to convert the second filtered outbound signal into second phase modulation information and second amplitude modulation information when a second one (e.g., in a high band of 1800 or 1900 MHz) of the third plurality of wireless communication protocols is active. The polar coordinate generation module provides the second phase modulation information to the local oscillation module such that the local oscillation module produces the high band transmit local oscillation having phase modulation. The second power amplifier driver module is coupled to amplify the high band transmit local oscillation having phase modulation in accordance with the second amplitude modulation to produce the third outbound high frequency signal 466.

The local oscillation module 254 is coupled to generate a low band transmit local oscillation in accordance with the one of the first plurality of wireless communication protocols and to generate a high band transmit local oscillation in accordance with the one of the second plurality of wireless communication protocols.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "coupled to" and/or "coupling" and/or includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" indicates that an item includes one or more of power connections, input(s), output(s), etc., to perform one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. An integrated circuit (IC) comprises:
a receiver module operable to convert an inbound high frequency signal into a down converted inbound signal based on a receive local oscillation independently of a protocol of the inbound high frequency signal, wherein the inbound high frequency signal has a carrier frequency within a first set of frequency bands and is formatted in accordance with one of a first plurality of wireless communication protocols that utilize at least one of the first set of frequency bands;
an inbound digital module coupled to compensate the down converted inbound signal in accordance with a selected one of the first plurality of wireless communication protocols to produce a protocol specific inbound signal;
a transmitter module operable to:
convert a first outbound signal into a first up converted signal based on a first representation of a transmit local oscillation when a first one of the first plurality of wireless communication protocols is active, wherein the first up converted signal has a carrier frequency within the first set of frequency bands; and
convert a second outbound signal into a second up converted signal based on a second representation of the transmit local oscillation when a second one of the first plurality of wireless communication protocols is active, wherein the second up converted signal has a carrier frequency within the first set of frequency bands; and
a local oscillation module coupled to generate the receive local oscillation and the transmit local oscillation in accordance with the selected one of the first plurality of wireless communication protocols.

2. The IC of claim 1, wherein the receiver module comprises:
a low noise amplifier module coupled to amplify the inbound high frequency signal to produce an amplified inbound high frequency signal;
a mixing module coupled to mix the amplified inbound high frequency signal with the receive local oscillation to produce a low frequency mixed signal;
an analog gain and filtering module coupled to perform at least one of filtering and gain adjusting of the low frequency mixed signal to produce an adjusted low frequency mixed signal; and
an analog to digital conversion module coupled to convert the adjusted low frequency mixed signal into the down converted inbound signal.

3. The IC of claim 2, wherein the low noise amplifier module comprises:
a first low noise amplifier coupled to amplify the inbound high frequency signal to produce the amplified inbound high frequency signal when the inbound high frequency signal has the carrier frequency within a first frequency band of the first set of frequency bands; and
a second low noise amplifier coupled to amplify the inbound high frequency signal to produce the amplified inbound high frequency signal when the inbound high frequency signal has the carrier frequency within a second frequency band of the first set of frequency bands.

4. The IC of claim 2, wherein the mixing module comprises:
an in-phase/quadrature (I/Q) mixer coupled to mix the amplified inbound high frequency signal with an I component of the receive local oscillation and to mix the amplified high frequency signal with a Q component of the receive local oscillation to produce an IQ mixed signal; and
a filtering stage coupled to filter the IQ mixed signal to produce the low frequency mixed signal.

5. The IC of claim 1 further comprises:
the receiver module converting a second inbound high frequency signal into a second down converted inbound signal based on a second receive local oscillation independently of a protocol of the second inbound high frequency signal, wherein the second inbound high frequency signal has a carrier frequency within a second set of frequency bands and is formatted in accordance with any one of a second plurality of wireless communication protocols that utilize the second frequency band;
the transmitter module converting a third outbound signal into a third up converted signal based on a second transmit local oscillation when a first one of the second plurality of wireless communication protocols is active, wherein the third up converted signal has a carrier frequency within the second set of frequency bands; and
the transmitter module converting a fourth outbound signal into a fourth up converted signal based on the second transmit local oscillation when a second one of the second plurality of wireless communication protocols is active, wherein the fourth up converted signal has a carrier frequency within the second set of frequency bands.

6. An integrated circuit (IC) comprises:
a first high frequency to low frequency receiver module coupled to convert a first inbound high frequency signal into a first inbound signal independently of a first plurality of wireless communication protocols, wherein the first inbound high frequency signal is formatted in accordance with one of the first plurality of wireless communication protocols and has a carrier frequency within a first set of frequency bands, wherein the first plurality of wireless communication protocols utilizes the first set of frequency bands;
a second high frequency to low frequency receiver module coupled to convert a second inbound high frequency signal into a second inbound signal independently of a second plurality of wireless communication protocols, wherein the second inbound high frequency signal is formatted in accordance with one of the second plurality of wireless communication protocols and has a carrier frequency within a second set of frequency bands, wherein the second plurality of wireless communication protocols utilizes the second set of frequency bands;
an analog low frequency filter and gain module coupled to filter and adjust gain of the first or second inbound signal to produce a filtered and gain adjusted inbound signal;
an analog to digital conversion module coupled to convert the filtered and gain adjusted inbound signal into a digital inbound signal; and
an inbound digital module coupled to convert the digital inbound signal into a first digitally processed inbound signal when the one of the first plurality of wireless communication protocols is active and to convert the digital inbound signal into a second digitally processed inbound signal when the one of the second plurality of wireless communication protocols is active.

7. The IC of claim 6 further comprises:
a local oscillation module coupled to generate a low band receive local oscillation in accordance with the one of the first plurality of wireless communication protocols and a high band receive local oscillation in accordance with the one of the second plurality of wireless communication protocols.

8. The IC of claim 7, wherein the first high frequency to low frequency receiver module comprises:
a low noise amplifier module including:
a first low noise amplifier coupled to amplify the first inbound high frequency signal to produce the first amplified inbound high frequency signal when the first inbound high frequency signal has the carrier frequency within a first frequency band of the first set of frequency bands; and
a second low noise amplifier coupled to amplify the first inbound high frequency signal to produce the first amplified inbound high frequency signal when the first inbound high frequency signal has the carrier frequency within a second frequency band of the first set of frequency bands; and
a mixing module including:
an in-phase/quadrature (I/Q) mixer coupled to mix the first amplified inbound high frequency signal with an I component of the low band receive local oscillation and to mix the first amplified high frequency signal with a Q component of the low band receive local oscillation to produce an IQ mixed signal; and
a filtering stage coupled to filter the IQ mixed signal to produce the first inbound signal.

9. The IC of claim 7, wherein the second high frequency to low frequency receiver module comprises:
a low noise amplifier module including:
a first low noise amplifier coupled to amplify the second inbound high frequency signal to produce the second amplified inbound high frequency signal when the second inbound high frequency signal has the carrier frequency within a first frequency band of the second set of frequency bands; and
a second low noise amplifier coupled to amplify the second inbound high frequency signal to produce the second amplified inbound high frequency signal when the second inbound high frequency signal has the carrier frequency within a second frequency band of the second set of frequency bands; and
a mixing module including:
an in-phase/quadrature (I/Q) mixer coupled to mix the second amplified inbound high frequency signal with an I component of the high band receive local oscillation and to mix the second amplified high frequency signal with a Q component of the high band receive local oscillation to produce an IQ mixed signal; and
a filtering stage coupled to filter the IQ mixed signal to produce the second inbound signal.

10. An integrated circuit (IC) comprises:
an outbound digital module coupled to convert a first digital outbound signal into a first digitally processed outbound signal when one of a first or a second plurality of wireless communication protocols is active and to convert a second digital outbound signal into a second digitally processed outbound signal when one of a third plurality of wireless communication protocols is active;
a digital to analog conversion module coupled to convert the first digitally processed outbound signal into a first analog outbound signal and to convert the second digitally processed outbound signal into a second analog outbound signal;
an analog filter module coupled to filter the first analog outbound signal to produce a first filtered outbound signal and to filter the second analog outbound signal to produce a second filtered outbound signal;
a first low frequency to high frequency transmitter module coupled to convert the first filtered outbound signal into a first outbound high frequency signal in accordance with the one of the first plurality of wireless communication protocols;
a second low frequency to high frequency transmitter module coupled to convert the first filtered outbound signal into a second outbound high frequency signal in accordance with the one of the second plurality of wireless communication protocols; and
a third low frequency to high frequency transmitter module coupled to convert the second filtered outbound signal into a third outbound high frequency signal in accordance with the one of the third plurality of wireless communication protocols.
